(19) Europäisches Patentamt
European Patent Office
Office européen des brevets

(11) **EP 4 502 950 A1**

(12) **EUROPEAN PATENT APPLICATION**
published in accordance with Art. 153(4) EPC

(43) Date of publication:
05.02.2025 Bulletin 2025/06

(51) International Patent Classification (IPC):
*G06T 7/73* (2017.01)

(21) Application number: 23879001.8

(22) Date of filing: 11.10.2023

(52) Cooperative Patent Classification (CPC):
G06T 7/73; G06F 16/23; G06F 16/583; G06T 7/74;
G06V 10/40; G06V 10/46; G06V 10/74

(86) International application number:
PCT/CN2023/123970

(87) International publication number:
WO 2024/083010 (25.04.2024 Gazette 2024/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.10.2022 CN 202211289232

(71) Applicant: Tencent Technology (Shenzhen)
Company Limited
Shenzhen, Guangdong 518057 (CN)

(72) Inventor: WANG, Haichuan
Shenzhen, Guangdong 518057 (CN)

(74) Representative: Nederlandsch Octrooibureau
P.O. Box 29720
2502 LS The Hague (NL)

(54) **VISUAL LOCALIZATION METHOD AND RELATED APPARATUS**

(57) Disclosed in embodiments of the present application are a visual localization method and a related apparatus, applicable to the field of traffic. The method comprises: obtaining a first image acquired by an image acquisition device when being located at a reference position; determining, from high-precision images corresponding to the reference position stored in a visual fingerprint library, a reference high-precision image matching the first image, the visual fingerprint library being used for storing high-precision images corresponding to an outdoor scene acquired by a high-precision device and three-dimensional position information of feature points in the high-precision images in the world coordinate system, and data stored in the visual fingerprint library being updated according to standard-precision images acquired by a common device; determining a target matching feature point pair according to feature points having the matching relationship in the first image and the reference high-precision image; and determining a high-precision localization result of the image acquisition device according to the three-dimensional position information of the feature point belonging to the reference high-precision image and two-dimensional position information of the feature point belonging to the first image in the target matching feature point pair. The method can achieve high-precision outdoor scene localization.

FIG. 2

## Description

This application claims priority to Chinese Patent Application No. 202211289232.4, filed with the China National Intellectual Property Administration on October 20, 2022 and entitled "VISION LOCALIZATION METHOD AND RELATED APPARATUS", which is incorporated herein by reference in its entirety.

## FIELD

This application relates to the field of positioning technologies, and in particular, to vision positioning.

## BACKGROUND

Currently, common positioning methods in outdoor scenarios generally depend on satellite-based global positioning systems. However, because of large changes in air density in the stratosphere and troposphere, the propagation speed of electromagnetic waves in the medium is unmeasurable. Consequently, it is difficult for the global positioning systems to achieve high positioning precision.

The vision positioning technology is hot research topic in recent years. The technology is applied to achieve high-precision positioning according to image information. The vision positioning technology is currently mainly applied to achieve positioning in indoor scenarios, for example, determining an indoor position of a mobile phone or a robot based on images taken by the mobile phone or the robot. Due to limitations of factors such as complex outdoor scenarios and great changes of outdoor scenarios (such as changes with factors including weather, seasons, lighting conditions, and the like), it is difficult for the vision positioning technology to be reliably applied in outdoor scenarios to achieve high-precision positioning.

## SUMMARY

Embodiments of the present disclosure provide a vision positioning method and a related apparatus, which can apply a vision positioning technology in an outdoor scenario, to implement high-precision positioning in the outdoor scenario.

In view of this, a first aspect of the present disclosure provides a positioning method, including:

obtaining a first image acquired by an image acquisition device at a reference position;

determining, from one or more pre-stored high definition images corresponding to the reference position, a reference high definition image matching the first image with respect to at least one image parameter, positioning precision of each of the one or more pre-stored high definition images being higher than positioning precision of the first image;

determining one or more target matching feature point pairs, each comprising a first feature point from the first image and a reference feature point from the reference high definition image that match each other with respect to feature matching; and

obtaining a positioning result using first position information of the reference feature point and second position information of the first feature point in each of target matching feature point pairs.

A second aspect of the present disclosure provides a positioning apparatus, including:

an image obtaining module, configured to obtain a first image acquired by an image acquisition device at a reference position;

a matching image determining module, configured to determine, from one or more pre-stored high definition images corresponding to the reference position, a reference high definition image matching the first image with respect to at least one image parameter, positioning precision of each of the one or more pre-stored high definition image being higher than positioning precision of the first image;

a matching feature point determining module, configured to determine one or more target matching feature point pairs, each comprising a first feature point from the first image and a reference feature point from the reference high definition image that match each other respect to feature matching; and

a high-precision positioning module, configured to obtain a positioning result using first position information of the reference feature point and second position information of the first feature point in each of target matching feature point pairs.

A third aspect of the present disclosure provides a computer device. The device includes a processor and a memory;

the memory is configured to store a computer program; and
the processor is configured to perform, according to the computer program, steps of the positioning method according to the first aspect.

A fourth aspect of the present disclosure provides a computer-readable storage medium, configured to store a computer program, the computer program being used for performing steps of the positioning method according to the first aspect.

A fifth aspect of the present disclosure provides a computer program product including a computer program, the computer program, when run on a computer, enabling the computer device to perform steps of the positioning method according to the first aspect.

According to the foregoing technical solutions, it can be learned that the embodiments of the present disclosure have the following advantages:

Embodiments of the present disclosure provide a vision positioning method. According to the method, high-precision positioning in an outdoor scenario is implemented based on high definition images corresponding to the outdoor scenario and position information of feature points in the high definition images. When positioning is performed, according to low-precision position information of a to-be-positioned image acquisition device, a matching reference high definition image may be determined first in high definition images corresponding to the low-precision position information. Then, target matching feature point pairs are determined according to feature points having matching relationships in a first image and the reference high definition image. Because the target matching feature point pairs are determined based on the matching relationships, and position information of the feature points belonging to the reference high definition image in the target matching feature point pairs is of high positioning precision, a reference position can be adjusted effectively based on positioning precision of the high definition images related to the target matching feature point pairs, position information of the feature points belonging to the first image in the target matching feature point pairs, and the matching relationships, so as to determine a positioning result. The positioning result can identify high-precision positioning information of the image acquisition device during acquisition of the first image. In this way, high-precision, high-efficiency, and high-reliability positioning of the image acquisition device in an outdoor scenario is implemented.

## BRIEF DESCRIPTION OF THE DRAWINGS

FIG. 1 is a schematic diagram showing an application scenario of a vision positioning method according to an embodiment of the present disclosure.

FIG. 2 is a schematic flowchart of a vision positioning method according to an embodiment of the present disclosure.

FIG. 3 is a schematic diagram showing matching feature point pairs in a first image and a reference high definition image according to an embodiment of the present disclosure.

FIG. 4 is a schematic diagram showing reference matching feature point pairs in a first image and a reference high definition image according to an embodiment of the present disclosure.

FIG. 5 is a schematic diagram showing target matching feature point pairs in a first image and a reference high definition image according to an embodiment of the present disclosure.

FIG. 6 is a schematic diagram showing an exemplary positioning result according to an embodiment of the present disclosure.

FIG. 7 is a schematic flowchart of a method for constructing a visual fingerprint database according to an embodiment of the present disclosure.

FIG. 8 is a schematic diagram of a high definition device according to an embodiment of the present disclosure.

FIG. 9 is a schematic diagram showing feature points in a high definition image according to an embodiment of the present disclosure.

FIG. 10 is a schematic diagram showing exemplary intra-frame matching according to an embodiment of the present disclosure.

FIG. 11 is a schematic diagram showing a sliding-window algorithm according to an embodiment of the present disclosure.

FIG. 12 is a schematic diagram showing exemplary inter-frame matching according to an embodiment of the present disclosure.

FIG. 13 is a schematic diagram showing another exemplary inter-frame matching according to an embodiment of the present disclosure.

FIG. 14 is a schematic diagram showing deriving a G matrix formula according to an embodiment of the present disclosure.

FIG. 15 is a schematic diagram showing determining associated elements in a standard definition image and a to-be-updated high definition image according to an embodiment of the present disclosure.

FIG. 16 is a schematic structural diagram of a vision positioning apparatus according to an embodiment of the present disclosure.

FIG. 17 is a schematic structural diagram of a terminal device according to an embodiment of the present disclosure.

FIG. 18 is a schematic structural diagram of a server according to an embodiment of the present disclosure.

## DESCRIPTION OF EMBODIMENTS

In order to enable a person skilled in the art to better understand the solutions of the present disclosure, the following clearly and completely describes the technical solutions of embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In this specification, claims, and accompanying drawings of the present disclosure, the terms "first", "second", "third", "fourth", and the like (if it exists) are intended to distinguish between similar objects but do not necessarily indicate a specific order or sequence. It is to be understood that such used data is interchangeable where appropriate, so that the embodiments of the present disclosure described here can be implemented in an order other than those illustrated or described here. Moreover, the terms "include", "have", and any other variants are intended to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

An intelligent traffic system (ITS) is also referred to as an intelligent transportation system, and effectively and comprehensively applies an advanced technology (such as an information technology, a computer technology, a data communication technology, a sensor technology, an electronic control technology, an automatic control theory, an operations research, and an artificial intelligence) to transportation, service control, and vehicle manufacturing, so as to strengthen a connection between a vehicle, a road, and a user, thereby forming an integrated transportation system for safety assurance, efficiency improvement, environmental enhancement, and energy saving. A vision positioning method provided in the embodiments of the present disclosure can assist in operation of the intelligent transportation system.

The vision positioning method provided in the embodiments of the present disclosure may be performed by a computer device having an image processing capability. The computer device may be a terminal device or a server. The terminal device includes but is not limited to a mobile phone, a computer, a smart voice interaction device, a smart home appliance, a vehicle-mounted terminal, an aerial vehicle, and the like. The server may be an independent physical server, a server cluster including a plurality of physical servers, a distributed system, or a cloud server.

In order to facilitate understanding of the vision positioning method provided in the embodiments of the present disclosure, an example in which the vision positioning method is performed by a server is used as an example to describe an application scenario of the vision positioning method.

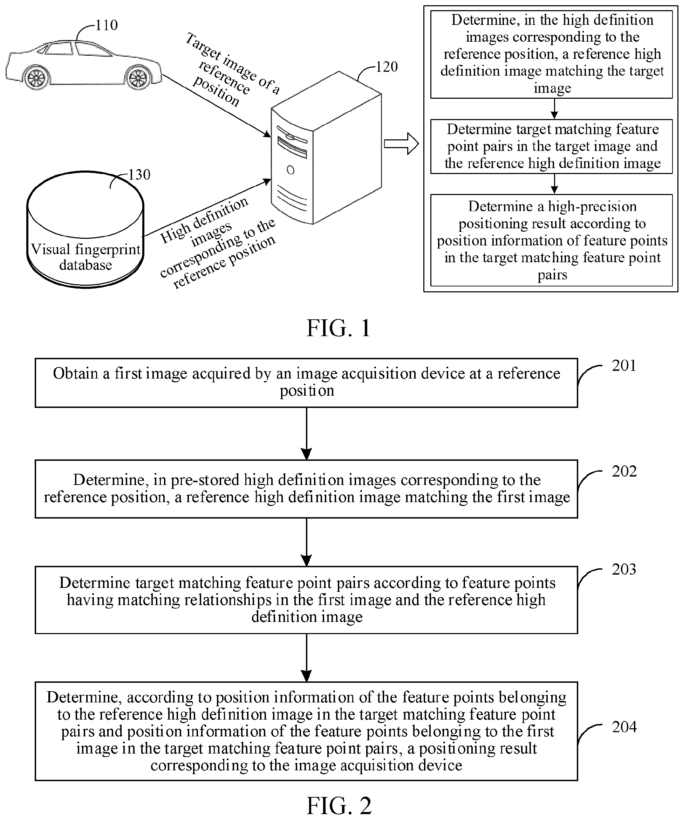

Refer to FIG. 1. FIG. 1 is a schematic diagram showing an application scenario of a vision positioning method according to an embodiment of the present disclosure. As shown in FIG. 1, the application scenario includes a vehicle 110, a server 120, and a visual fingerprint database 130. The vehicle 110 may communicate with the server 120 via a network. The server 120 may access the visual fingerprint database 130 via the network, or the visual fingerprint database 130 may be integrated in the server 120.

In actual application, a vehicle-mounted terminal on the vehicle 110 may determine, by using a global positioning system, a reference position (with low positioning precision) at which the vehicle 110 is located currently. In this case, an event data recorder mounted on the vehicle 110 may acquire a first image, and transmit the first image to the vehicle-mounted terminal. Furthermore, the vehicle-mounted terminal may send the reference position and the first image acquired by the event data recorder when the vehicle 110 is located at the reference position to the server 120 via a network.

After receiving the reference position and the first image, the server 120 may first determine high definition images corresponding to the reference position in the visual fingerprint database 130, and then determine a reference high definition image matching the first image in the high definition images corresponding to the reference position. In this way, by staged searching, efficiency of searching the reference high definition image can be improved, thereby avoiding excessive time consumption during full search. The visual fingerprint database 130 stores high definition images corresponding to an outdoor scenario acquired by a high definition (HD) device and three-dimensional position information in a world coordinate system of feature points in the high definition images, and data stored in the visual fingerprint database 130 may be updated according to standard definition (SD) images acquired by a common device. Because costs of the common device acquiring the standard definition images are low, the standard definition images acquired by the common device can be obtained frequently, and the visual fingerprint database 130 can be updated according to the obtained standard definition images, to ensure that the data stored in the visual fingerprint database 130 has both high precision and freshness.

After determining the reference high definition image matching the first image, the server 120 may detect feature points having matching relationships in the first image and the reference high definition image, and perform an outlier removal operation based on the feature points having the matching relationships, to obtain target matching feature point pairs having high reliability. Furthermore, the server 120 may determine, according to three-dimensional position information in a world coordinate system of the feature points belonging to the reference high definition image in the target matching feature point pairs and two-dimensional position information in an image coordinate system of the feature points belonging to the first image in the target matching feature point pairs, a high-precision positioning result corresponding to the image acquisition device.

The application scenario shown in FIG. 1 is merely an example. In actual application, the vision positioning method provided in the embodiments of the present disclosure may alternatively be applied in other scenarios, for example, may alternatively be applied to implement outdoor scenario positioning for a mobile phone. The application scenario of the vision positioning method provided in the embodiments of the present disclosure is not limited herein.

The vision positioning method provided in the present disclosure is described in detail in the following method embodiments. The steps in the method are not necessarily performed in the order as they are described in the present disclosure. For example, according to actual situation, two steps can be performed simultaneously or in an order different from the order in which they are described.

Refer to FIG. 2. FIG. 2 is a schematic flowchart of a vision positioning method according to an embodiment of the present disclosure. To facilitate description, an example in which the vision positioning method is performed by a server (as an example of the foregoing computer device) is used for description in the following embodiments. As shown in FIG. 2, the vision positioning method includes the following steps:

Step 201: Obtain a first image acquired by an image acquisition device at a reference position.

In this embodiment of the present disclosure, the server may obtain the reference position at which the image acquisition device is currently located and the first image acquired by the image acquisition device at the reference position. The image acquisition device in this embodiment of the present disclosure is a to-be-positioned device, and may be, for example, a to-be-positioned vehicle or a mobile terminal. For the reference position of the image acquisition device, the server may currently only obtain position information having low positioning precision, and may identify a current position of the image acquisition device. The reference position may generally be a positioning result determined by a satellite positioning system (such as the Global Positioning System (GPS) or the Beidou Navigation Satellite System) or another positioning method. The first image is an image acquired by the image acquisition device at the reference position. The first image may be, for example, an image acquired by an event data recorder mounted on a to-be-positioned vehicle, or an image acquired by a camera of a to-be-positioned mobile terminal.

An example in which the image acquisition device is a to-be-positioned target vehicle is used for description. A vehicle-mounted terminal on the target vehicle may determine a current reference position (with low positioning precision) at which the target vehicle is located according to a positioning signal of the global positioning system. In addition, the vehicle-mounted terminal may further receive a first image acquired by an event data recorder on the target vehicle. Furthermore, the vehicle-mounted terminal may send the reference position and the first image to the server.

Certainly, in actual application, the server may alternatively obtain the reference position of the image acquisition device and the first image in other manners. A manner of obtaining the reference position and the first image by the server is not limited herein in the present disclosure.

Step 202: Determine, from pre-stored high definition images corresponding to the reference position, a reference high definition image matching the first image.

The high definition images may be pre-stored at a storage position that can be retrieved by the server, for example, in a database. The database may be a vision positioning-based fingerprint database, in which high definition images are associated with positioning information, that is, high definition images are used as "fingerprints" of positioning information. Because the database is constructed based on visual data such as images, the database may be specifically referred to as a visual fingerprint database.

Positioning precision of each pre-stored high definition image is higher than that of the first image.

The visual fingerprint database is used for storing high definition images corresponding to an outdoor scenario and three-dimensional position information in a world coordinate system of feature points in the high definition images, and data stored in the visual fingerprint database is updated according to standard definition images. A high definition image stored in the visual fingerprint database is also referred to as a "candidate high definition image".

After obtaining the reference position of the image acquisition device and the first image acquired by the image acquisition device at the reference position, the server may first determine, according to the reference position, the high definition images corresponding to the reference position in a large quantity of high definition images stored in the visual fingerprint database. Then, the server may determine, in the high definition images corresponding to the reference position, a high definition image matching the first image as the reference high definition image. In this way, searching the reference high definition image in the visual fingerprint database in a staged manner, can improve efficiency of searching the reference high definition image, thereby improving efficiency of positioning the image acquisition device.

For example, all the high definition images stored in the visual fingerprint database are associated with position information. The position information associated with the high definition images is position information of a high definition device during acquisition of the high definition images by the high definition device. On this basis, the server may first search, according to the reference position of the image acquisition device, the visual fingerprint database for the high definition images corresponding to the reference position, for example, search for high definition images, a distance of which between associated position information and the reference position being less than a preset distance threshold, and use the high definition images as the high definition images corresponding to the reference position.

Furthermore, the server may further search the high definition images corresponding to the reference position for the reference high definition image matching the first image. For example, the server may calculate similarity between each high definition image, corresponding to the reference position, and the first image by comparing pixels. Furthermore, a high definition image, similarity between which and the first image exceeds a preset similarity threshold, is determined as the reference high definition image, or a high definition image having the highest similarity between the first image is determined as the reference high definition image. For another example, the server may determine, by using a feature extraction algorithm (such as a superpoint algorithm), a feature descriptor of the first image and a feature descriptor of each high definition image corresponding to the reference position. Then, for each high definition image corresponding to the reference position, the server determines a matching degree between the high definition image and the first image according to the feature descriptor of the first image and the feature descriptor of the high definition image. Furthermore, a high definition image, a matching degree between which and the first image exceeds a preset matching degree threshold, is determined as the reference high definition image, or a high definition image having the highest matching degree between the first image is determined as the reference high definition image.

Certainly, in actual application, the server may determine the high definition images corresponding to the reference position and the reference high definition image matching the first image in other manners. A manner of determining the high definition images corresponding to the reference position and the reference high definition image is not limited herein in the present disclosure.

The foregoing visual fingerprint database is constructed based on the high definition images. The visual fingerprint database stores high definition images corresponding to an outdoor scenario acquired by the high definition device (such as a professional acquisition device with a laser radar) and position information in a unified coordinate system of the feature points in the high definition images. The visual fingerprint database may further store update time of three-dimensional position information of each feature point. The update time is used for indicating time for detecting, for the last time, whether the three-dimensional position information of the feature point is valid. In addition, the foregoing data stored in the visual fingerprint database may be updated according to standard definition images. Specifically, the update time of the three-dimensional position information of the feature points may be updated according to standard definition images acquired by a common device (for example, the image acquisition device mentioned in the embodiments of the present disclosure, such as an event data recorder or a mobile phone), or the high definition images may be updated according to standard definition images acquired by a common device, for example, elements newly added in an outdoor scenario are reconstructed in the high definition images. The update may be performed in real-time based on the standard definition images, or may be performed periodically, for example, the visual fingerprint database is uniformly updated based on standard definition images acquired within a period.

The foregoing unified coordinate system may be a coordinate system agreed to be uniformly used in a region based on a positioning requirement, such as a world coordinate system within the world, or a national coordinate system within a country, which is not limited herein.

A manner of constructing the foregoing visual fingerprint database and a manner of updating the data stored in the visual fingerprint database according to standard definition images acquired by a common device are described below in another method embodiment. For details, reference may be made to the following method embodiment, and details are not described in this method embodiment.

Step 203: Determine target matching feature point pairs according to feature points having matching relationships in the first image and the reference high definition image. A target matching feature point pair can include a feature point in the first image and a feature point in the reference high definition image that match each other. In this disclosure, a feature point in the first image is also referred to as a "first feature point," and a feature point in the reference high definition image is also referred to as a "reference feature point".

In addition, the server may detect the feature points in the first image by using a feature extraction algorithm. For example, the feature points in the first image may be detected by using a superpoint algorithm, a scale-invariant feature transform (SIFT) algorithm, or the like. Furthermore, the server may detect the feature points having the matching relationships in the first image and the reference high definition image by using a feature matching algorithm. For example, the feature points having the matching relationships in the first image and the reference high definition image may be determined by using a superglue algorithm, a SIFT algorithm, or the like. That is, the matching feature point pairs in the first image and the reference high definition image are determined. In other words, one matching feature point pair may include two feature points, for example, a first feature point and a second feature point. The first feature point is a feature point in the first image, and the second feature point is a feature point in the reference high definition image.

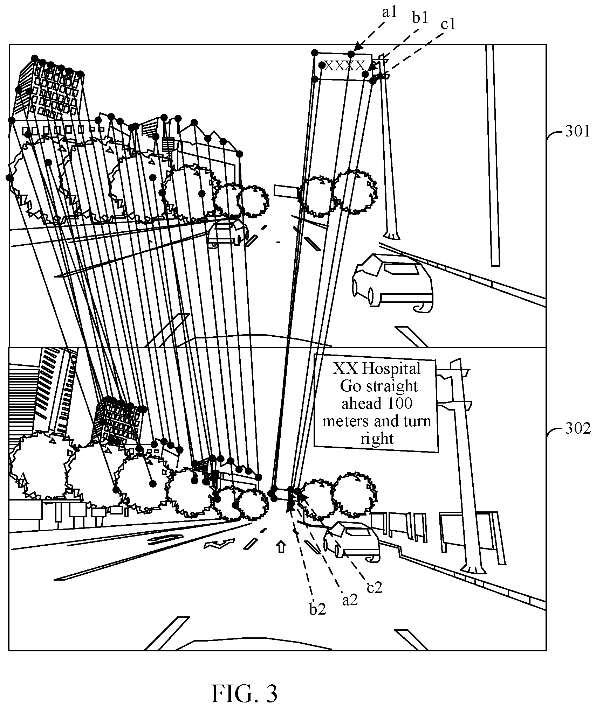

FIG. 3 is a schematic diagram showing exemplary matching feature point pairs in a first image and a reference high definition image according to an embodiment of the present disclosure. 301 refers to the first image, and 302 refers to the reference high definition image. Two black dots connected to each other through a line form a matching feature point pair. For example, a feature point a1 and a feature point a2 form a matching feature point pair, a feature point b1 and a feature point b2 form a matching feature point pair, and a feature point c1 and a feature point c2 form a matching feature point pair.

Considering that reliability of the matching feature point pairs determined by the foregoing method may be low, and there are matching feature point pairs having unreliable matching relationships in the matching feature point pairs, to avoid an impact of the matching feature point pairs having the unreliable matching relationships on accuracy and reliability of a positioning result determined subsequently, an outlier removal operation may be performed on the matching feature point pairs in the embodiments of the present disclosure, to remove the matching feature point pairs having the unreliable matching relationships and retain matching feature point pairs having reliable matching relationships as the target matching feature point pairs, so as to facilitate subsequent positioning based on the target matching feature point pairs.

In a possible implementation, the server may perform the outlier removal operation based on a fundamental matrix (F matrix) or an essential matrix (E matrix). In other words, the server may construct candidate matching feature point pairs based on the feature points having the matching relationships in the first image and the reference high definition image. A candidate matching feature point pair can include a feature point in the first image (a first feature point) and a feature point in the reference high definition image (a reference feature point) that match each other. The first feature point in the candidate matching feature point pair is also referred to as a "matching-candidate first feature point" or simply "candidate first feature point," and the reference feature point in the candidate matching feature point pair is also referred to as a "matching-candidate reference feature point" or simply "candidate reference feature point". Then, the server performs a plurality of first-level outlier removal operations based on the candidate matching feature point pairs. The first-level outlier removal operation includes: selecting basic matching feature point pairs in the candidate matching feature point pairs; determining a predicted pose of the image acquisition device according to the basic matching feature point pairs; and determining a removal result and a removal effect of the first-level outlier removal operation according to the predicted pose and the candidate matching feature point pairs. Furthermore, a target first-level outlier removal operation having an optimal removal effect in the plurality of first-level outlier removal operations is determined, and the target matching feature point pairs are determined according to a removal result of the target first-level outlier removal operation.

For example, the server may use all pairs of feature points having the matching relationships that are in the first image and the reference high definition image and that are detected by the feature matching algorithm as the candidate matching feature point pairs. Then a random sample consensus (Ransac) algorithm is used to perform the plurality of first-level outlier removal operations based on the candidate matching feature point pairs. The Ransac algorithm is an iterative algorithm that correctly estimates a mathematical model parameter based on a group of data including outliers. The outlier generally refers to noise in data, and the outlier in the embodiments of the present disclosure refers to candidate matching feature point pairs having unreliable matching relationships.

Specifically, when performing each first-level outlier removal operation, the server may randomly select a preset quantity of basic matching feature point pairs from the candidate matching feature point pairs, and then determine the E matrix or the F matrix according to the selected basic matching feature point pairs. The determined E matrix or F matrix may reflect a predicted pose of the image acquisition device. The predicted pose is used for representing a pose of the image acquisition device relative to an acquisition device for the reference high definition image, that is, the predicted pose is a relative pose essentially. For example, when it is needed to reflect the predicted pose of the image acquisition device based on the E matrix, five basic matching feature point pairs may be selected from the candidate matching feature point pairs, and then, by using a five-point method, the E matrix is determined according to position information of feature points included in the five basic matching feature point pairs. For example, when it is needed to reflect the predicted pose of the image acquisition device based on the F matrix, seven or eight basic matching feature point pairs may be selected from the candidate matching feature point pairs, and then, by using a seven-point method or an eight-point method, the F matrix is determined according to position information of feature points included in the seven or eight basic matching feature point pairs.

After the predicted pose of the image acquisition device is determined, an epipolar line may be constructed between the first image and the reference high definition image according to the predicted pose of the image acquisition device. Then, based on epipolar constraint, candidate matching feature point pairs (outliers) that need to be removed in this first-level outlier removal operation and candidate matching feature point pairs (inliers) that need to be retained are determined. If two cameras shoot a same object at different positions, or a moving camera shoot a same object at different moments, geometric correspondences exist between points in a plurality of shot images. The geometric correspondences may be described by using epipolar geometry, that is, epipolar constraint. In the embodiments of the present disclosure, an epipolar line used for reflecting geometric correspondences between the first image and the reference high definition image may be constructed according to the predicted pose of the image acquisition device. If a distance between each feature point in a candidate matching feature point pair and the epipolar line is less than a preset distance threshold, it may be considered that the candidate matching feature point pair is a candidate matching feature point pair that can be retained. On the contrary, if a distance between any feature point in a candidate matching feature point pair and the epipolar line exceeds a preset distance threshold, it may be considered that the candidate matching feature point pair is a candidate matching feature point pair that need to be removed.

The candidate matching feature point pairs that need to be removed and the candidate matching feature point pairs that need to be retained determined in the foregoing manner are removal results of this first-level outlier removal operation. The server may use a quantity of the candidate matching feature point pairs that need to be retained and that are determined by this first-level outlier removal operation as a removal effect of this first-level outlier removal operation. In this case, a larger quantity of the candidate matching feature point pairs that need to be retained indicates a better removal effect of this first-level outlier removal operation. Alternatively, the server may use a quantity of the candidate matching feature point pairs that need to be removed determined by this first-level outlier removal operation as a removal effect of this first-level outlier removal operation. In this case, a smaller quantity of the candidate matching feature point pairs that need to be removed indicates a better removal effect of this first-level outlier removal operation. Alternatively, the server may calculate a sum of distances between the feature points in the candidate matching feature point pairs and the constructed epipolar line and use the sum as a removal effect of this first-level outlier removal operation. In this case, a less distance sum indicates a better removal effect of this first-level outlier removal operation. Certainly, in actual application, the server may alternatively use other indicators as the removal effect of the first-level outlier removal operation, which is not limited in the present disclosure.

After performing a preset times of first-level outlier removal operations based on the candidate matching feature point pairs, the server may select a first-level outlier removal operation having an optimal removal effect from the first-level outlier removal operations, and determine the first-level outlier removal operation as a target first-level outlier removal operation. In addition, according to the removal result of the target first-level outlier removal operation, to be specific, according to candidate matching feature point pairs retained after the target first-level outlier removal operation, the target matching feature point pairs are determined.

In this way, performing outlier removal based on the E matrix or the F matrix in the foregoing manner can effectively avoid an impact of a camera intrinsic parameter error of the image acquisition device on the outlier removal, thereby ensuring a quantity of retained candidate matching feature point pairs.

In a possible case, the server may directly use the candidate matching feature point pairs retained after the target first-level outlier removal operation as the target matching feature point pairs.

In another possible case, mismatching feature points near the epipolar line are difficult to be removed based on the E matrix or the F matrix. For example, there are many mismatching candidate matching feature point pairs in the first image and the reference high definition image in a texture repetition region. Because these mismatching feature point pairs are difficult to be removed based on the E matrix or the F matrix, on the basis of the foregoing first-level outlier removal operation, the embodiments of the present disclosure provide a solution for performing second-level outlier removal based on a perspective-n-point (PnP) algorithm.

In other words, the server may determine candidate matching feature point pairs retained after the target first-level outlier removal operation as reference matching feature point pairs. Then, the server performs a plurality of second-level outlier removal operations based on the reference matching feature point pairs. The second-level outlier removal operation includes: determining, according to an assumed rotation parameter, an assumed translation parameter, and three-dimensional position information of feature points belonging to the reference high definition image in the reference matching feature point pairs, two-dimensional position information of the feature points belonging to the reference high definition image; and determining a removal result and a removal effect of the second-level outlier removal operation according to the two-dimensional position information of the feature points belonging to the reference high definition image and two-dimensional position information of feature points belonging to the first image in the reference matching feature point pair. Furthermore, a target second-level outlier removal operation having an optimal removal effect in the plurality of second-level outlier removal operations is determined, and the target matching feature point pairs are determined according to a removal result of the target second-level outlier removal operation.

For example, the server may use candidate matching feature point pairs retained after the target first-level outlier removal operation as reference matching feature point pairs. Then, the server performs the plurality of second-level outlier removal operations by using the PnP algorithm based on the reference matching feature point pairs. The PnP algorithm is an algorithm to solve a two-dimensional and three-dimensional point pair pose, to be specific, an algorithm to estimate a camera pose in a case that n three-dimensional space point coordinates and a two-dimensional projection position are known. In the embodiments of the present disclosure, inverse operation of the PnP algorithm is used to calculation of estimating a two-dimensional projection position of a three-dimensional space point in a case that the camera pose and the three-dimensional space point coordinates are known.

Specifically, when performing each second-level outlier removal operation, the server may first set an assumed rotation parameter and an assumed translation parameter corresponding to this second-level outlier removal operation, to be specific, an assumed camera pose on which this second-level outlier removal operation is based is preset. An assumed rotation parameter and an assumed translation parameter corresponding to each second-level outlier removal operation are different. Then, two-dimensional position information in a camera coordinate system (that is, an image coordinate system of the first image) of the image acquisition device of feature points belonging to the reference high definition image and in the reference matching feature point pairs is determined according to the assumed rotation parameter, the assumed translation parameter, and three-dimensional position information in the world coordinate system of the feature points belonging to the reference high definition image and in the reference matching feature point pairs. The three-dimensional position information herein in the world coordinate system of the feature points in the reference high definition image may be obtained from the visual fingerprint database. Furthermore, for each reference matching feature point pair, the server may determine a reference two-dimensional distance between two feature points in the reference matching feature point pair according to the two-dimensional position information in the image coordinate system of the feature point belonging to the reference high definition image in the reference matching feature point pair and two-dimensional position information in the image coordinate system of feature point belonging to the first image in the reference matching feature point pair. If the reference two-dimensional distance is less than a preset two-dimensional distance threshold, the reference matching feature point pair may be determined as a reference matching feature point pair that needed to be retained after this second-level outlier removal operation. That is, the reference matching feature point pair is determined as inliers. On the contrary, if the reference two-dimensional distance is larger than the preset two-dimensional distance threshold, the reference matching feature point pair may be determined as a reference matching feature point pair that needed to be removed in this second-level outlier removal operation. That is, the reference matching feature point pair is determined as outliers.

The reference matching feature point pairs that need to be removed and the reference matching feature point pairs that need to be retained determined in the foregoing manner are removal results of this second-level outlier removal operation. The server may use a quantity of the reference matching feature point pairs that need to be retained determined by this second-level outlier removal operation as a removal effect of this second-level outlier removal operation. In this case, a larger quantity of the reference matching feature point pairs that need to be retained indicates a better removal effect of this second-level outlier removal operation. Alternatively, the server may use a quantity of the reference matching feature point pairs that need to be removed determined by this second-level outlier removal operation as a removal effect of this second-level outlier removal operation. In this case, a smaller quantity of the reference matching feature point pairs that need to be removed indicates a better removal effect of this second-level outlier removal operation. Alternatively, the server may calculate a sum of reference two-dimensional distances respectively corresponding to the reference matching feature point pairs as a process result of this second-level outlier removal operation. In this case, a less sum of the reference two-dimensional distances indicates a better removal effect of this second-level outlier removal operation.

Certainly, in actual application, the server may alternatively use other indicators as the removal effect of the second-level outlier removal operation, which is not limited in the present disclosure.

After performing a preset times of second-level outlier removal operations based on the reference matching feature point pairs, the server may select a second-level outlier removal operation having an optimal removal effect from the second-level outlier removal operations, and determine the second-level outlier removal operation as a target second-level outlier removal operation. In addition, according to the removal result of the target second-level outlier removal operation, to be specific, according to the reference matching feature point pairs retained after the target second-level outlier removal operation, the target matching feature point pairs are determined. For example, the reference matching feature point pairs retained after the target second-level outlier removal operation may be directly used as the target matching feature point pairs.

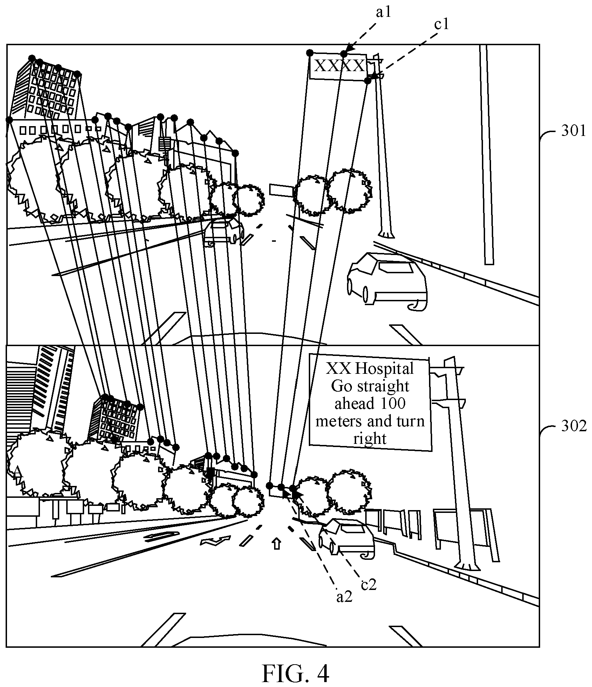

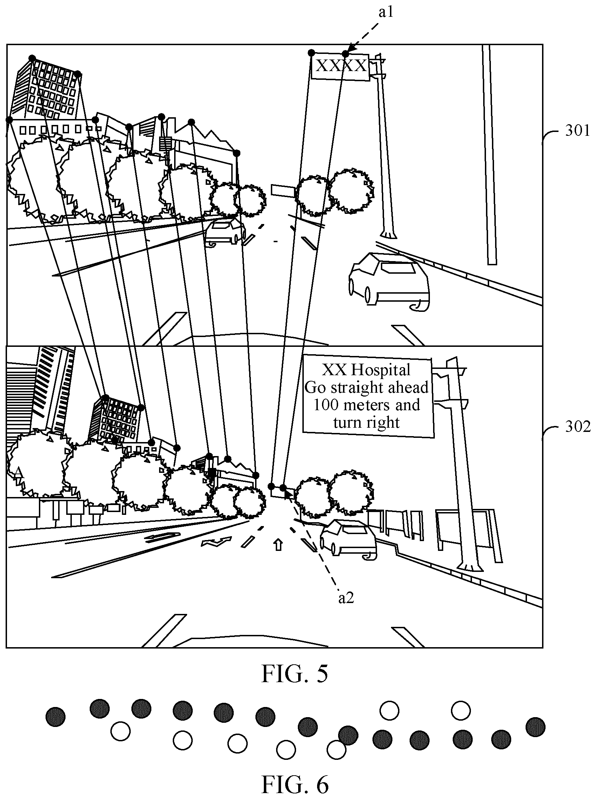

FIG. 4 is a schematic diagram showing exemplary reference matching feature point pairs in a first image and a reference high definition image. FIG. 5 is a schematic diagram showing exemplary target matching feature point pairs in a first image and a reference high definition image. It can be learned from comparison between FIG. 3 and FIG. 4 that in the matching feature point pairs in FIG. 3, the matching feature point pair b formed by the feature point b1 and the feature point b2 and the matching feature point pair c formed by the feature point c1 and the feature point c2 present relative position shift of the feature points and have low reliability. However, in matching feature point pairs in FIG. 4, a matching feature point pair c formed by a feature point c1 and a feature point c2 presents relative position shift of the feature points, and has higher reliability with respect to that in FIG. 3. In other words, the reference matching feature point pairs in FIG. 4 has higher reliability compared with the candidate matching feature point pairs in FIG. 3.

It can be learned from comparison between FIG. 4 and FIG. 5 that in the matching feature point pairs in FIG. 4, the matching feature point pair c formed by the feature point c1 and the feature point c2 presents relative position shift of the feature points. However, in the matching feature point pairs in FIG. 5, a matching feature point pair a formed by a feature point a1 and a feature point a2 present accurate relative positions of the feature points, and has higher reliability with respect to that in FIG. 4. In other words, the target matching feature point pairs in FIG. 5 has higher reliability compared with the reference matching feature point pairs in FIG. 4. Basically, no mismatching feature point pairs are presented in FIG. 5.

The foregoing reliability comparisons are only examples, and are reliability identification results in a case that other matching feature point pairs than matching feature point pairs with labels are completely same.

In this way, performing the second-level outlier removal operation based on the PnP algorithm in the foregoing manners can effectively reduce mismatching feature point pairs in a texture repetition region in an image, and can further improve purity of the retained matching feature point pairs, that is, ensure the retained target matching feature point pairs to have high reliability.

In actual application, the server may alternatively use other manners to perform the outlier removal operation on the matching feature point pairs in the first image and the reference high definition image, which is not limited in the present disclosure.

Step 204: Determine, according to position information of the feature points belonging to the reference high definition image in the target matching feature point pairs and position information of the feature points belonging to the first image in the target matching feature point pairs, a positioning result corresponding to the image acquisition device.

Because the positioning precision of each pre-stored high definition image is higher than that of the first image, positioning precision of a positioning result obtained based on calibration and adjustment of positioning information corresponding to the high definition images is higher than that of the reference position.

Precision of the position information of the feature points belonging to the reference high definition image in the target matching feature point pairs is higher than that of the position information of the feature points belonging to the first image in the target matching feature point pairs. Because the reference high definition image carries depth information generally, the position information of the feature points in the reference high definition image may be three-dimensional position information. Because the first image is acquired by an image acquisition device with low precision, the first image does not carry the depth information generally. Therefore, the position information of the feature points in the first image may be two-dimensional position information.

When a geographic coordinate system that is of the high definition images and that is used for identifying the position information is a world coordinate system, the position information of the feature points in the reference high definition image may be three-dimensional position information in the world coordinate system. When a geographic coordinate system that is of the first image and that is used for identifying the position information is an image coordinate system for imaging, the position information of the feature points in the first image may be two-dimensional position information in the image coordinate system.

After screening target matching feature point pairs having high reliability by step 203, the server may determine, according to the three-dimensional position information in the world coordinate system of the feature points belonging to the reference high definition image in the target matching feature point pairs and the two-dimensional position information in the image coordinate system of feature points belonging to the first image in the target matching feature point pairs, a high-precision positioning result corresponding to the image acquisition device. The three-dimensional position information in the world coordinate system of the feature points belonging to the reference high definition image in the target matching feature point pairs may be obtained from the visual fingerprint database. The two-dimensional position information in the image coordinate system of the feature points belonging to the first image and in the target matching feature point pairs may be directly determined according to positions of the feature points in the first image. The positioning result corresponding to the image acquisition device may be represented by a position and an attitude in the world coordinate system of the image acquisition device, and positioning precision of the positioning result may be as high as 30 cm. Based on the positioning result, various services that require high positioning precision can be implemented, such as lane-level navigation and autonomous driving.

In a possible implementation, the positioning result of the image acquisition device may be determined by using a bundle adjustment (BA) optimization algorithm. In other words, the server may determine a projection error according to the three-dimensional position information of the feature points belonging to the reference high definition image in the target matching feature point pairs, the two-dimensional position information of the feature points belonging to the first image in the target matching feature point pairs, a camera intrinsic parameter of the image acquisition device, and an attitude parameter and a position parameter of the image acquisition device. Then the attitude parameter and the position parameter of the image acquisition device are optimized by minimizing the projection error, and the high-precision positioning result of the image acquisition device is determined according to an optimized attitude parameter and an optimized position parameter of the image acquisition device.

The BA optimization algorithm is also referred to as bundle adjustment, that is, an algorithm eliminating an error based on a beam. Essence of the BA algorithm is to optimize a model, and the algorithm can optimize a position and an attitude of a camera by minimizing a projection error.

The camera intrinsic parameter may specifically include an intrinsic parameter matrix and a distortion parameter. The intrinsic parameter matrix may be constructed according to fx, fy, cx, and cy. fx=F/dx, and fy=F/dy. F represents a focal length of the camera, dx and dy represent length units corresponding to one pixel in an x-axis direction and a y-axis direction respectively, to be specific, an actual physical value represented by one pixel in the x-axis direction and the y-axis direction, and cx and cy represent respectively a quantity of horizontal pixels and a quantity of vertical pixels that are of difference between pixel coordinates of an image center and pixel coordinates of an image origin. The distortion parameter is a parameter to convert points in the image coordinate system into a pixel coordinate system, and generally includes a radial distortion parameter and a tangential distortion parameter. In the embodiments of the present disclosure, if the image acquisition device can provide the camera intrinsic parameter of the image acquisition device for the server, in other words, the camera intrinsic parameter is provided on the image acquisition device, the server may directly use the camera intrinsic parameter provided by the image acquisition device to determine a position and an attitude of the image acquisition device. If the image acquisition device cannot provide the camera intrinsic parameter for the server, the server needs to use the BA optimization algorithm to estimate the camera intrinsic parameter.

For example, the server can optimize the position and the attitude of the camera based on a visual projection error by using the following Formula (1):

$$\min_{R,t} \sum \left\lVert K(RP_w + t) - p_{sd} \right\rVert^2 \qquad (1)$$

K represents the camera intrinsic parameter of the image acquisition device, R represents an attitude parameter (generally represented by a rotation matrix) of the camera of the image acquisition device in the world coordinate system, t represents a position parameter (generally represented by longitude, latitude, and altitude) in the world coordinate system of the camera of the image acquisition device, $P_w$ represents the three-dimensional position information (obtained from the visual fingerprint database) in the world coordinate system of the feature points belonging to the reference high definition image in the target matching feature point pairs, $p_{sd}$ represents the two-dimensional position information in the image coordinate system of the feature points belonging to the first image in the target matching feature point pairs, and the feature points corresponding to $P_w$ and the feature points corresponding to $p_{sd}$ belong to a same target matching feature point pair.

The server minimizes the projection error by using the foregoing Formula (1), and optimizes the attitude parameter R of the image acquisition device and the position parameter t of the image acquisition device during the process. When the projection error satisfies a preset minimizing condition, the high-precision positioning result in the world coordinate system of the image acquisition device may be determined according to an optimized attitude parameter R and an optimized position parameter t of the image acquisition device in this case.

FIG. 6 is a schematic diagram showing an exemplary positioning result. In FIG. 6, a black circle represents a pose of a high definition device used for acquiring high definition images, and a white circle in FIG. 6 represents a pose of an image acquisition device determined through the foregoing process. By comparisons of a track of black circles and a track of white circles, it can be learned that a positioning difference between the image acquisition device and the high definition device is about one lane.

According to the vision positioning method provided in the embodiments of the present disclosure, high-precision positioning in an outdoor scenario is implemented based on a visual fingerprint database storing high definition images corresponding to the outdoor scenario and three-dimensional position information in a world coordinate system of feature points in the high definition images. Specifically, when positioning is performed based on the visual fingerprint database, according to low-precision position information of a to-be-positioned image acquisition device, a reference high definition image matching a first image acquired by the image acquisition device at the low-precision position information may be determined first in high definition images corresponding to the low-precision position information stored in the visual fingerprint database. Then, target matching feature point pairs are determined according to feature points having matching relationships in the first image and the reference high definition image, and high-precision positioning information of the image acquisition device is determined according to three-dimensional position information in a world coordinate system of the feature points belonging to the reference high definition image in the target matching feature point pairs and two-dimensional position information of the feature points in an image coordinate system belonging to the first image in the target matching feature point pairs. In this way, high-precision, high-efficiency, and high-reliability positioning of the image acquisition device in an outdoor scenario is implemented based on the visual fingerprint database.

A method for constructing the visual fingerprint database applied in the vision positioning method shown in FIG. 2 is described in detail in the following method embodiments.

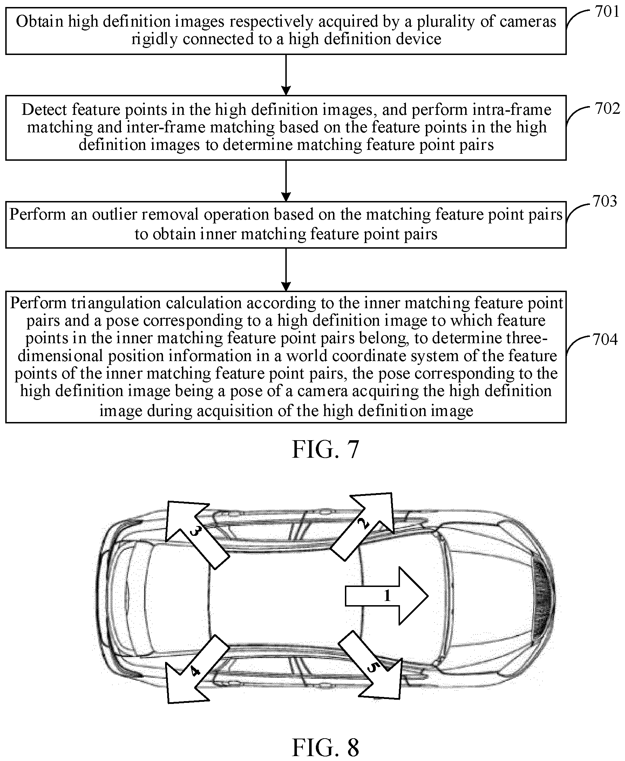

Refer to FIG. 7. FIG. 7 is a schematic flowchart of a method for constructing a visual fingerprint database according to an embodiment of the present disclosure. For convenience of description, the following embodiments still uses an example in which the method for constructing the visual fingerprint database is performed by a server for description. Certainly, the method for constructing the visual fingerprint database may alternatively be performed by a terminal device. As shown in FIG. 7, the method for constructing the visual fingerprint database includes the following steps:

Step 701: Obtain high definition images acquired respectively by a plurality of cameras rigidly connected to a high definition device.

In the embodiments of the present disclosure, the high definition device may acquire the high definition images by the plurality cameras rigidly connected to and mounted on the high definition device, and transmit the acquired high definition images to the server, to enable the server to construct the visual fingerprint database according to the high definition images. The high definition device in the embodiments of the present disclosure is a device that can determine a positioning result of the high definition device in high precision. The high definition device may be, for example, a vehicle having high-precision positioning performance.

For example, FIG. 8 is a schematic diagram of a high definition device according to an embodiment of the present disclosure. As shown in FIG. 8, the high definition device is a vehicle having high-precision positioning performance. A real-time kinematic (RTK) apparatus, an inertial measurement unit (IMU), and a high-precision wheel speed detection apparatus may be mounted on the vehicle, and such components can help the vehicle implement high-precision positioning. In addition, five cameras may be mounted on the vehicle. Arrows with numerals 1, 2, 3, 4, and 5 in FIG. 8 indicate mounting positions of the cameras and lens orientations of the cameras. An included angle between every two adjacent cameras is about 72 degrees. Each camera may have an elevation angle about 20 degrees upward. The five cameras are rigidly connected.

The high definition device shown in FIG. 8 is only for example. In actual application, the high definition device may alternatively be represented as a device in another form, such as a mobile terminal. In addition, the mounting positions of the cameras on the high definition device may alternatively be configured according to actual requirement, which is not limited in the embodiments of the present disclosure.

Step 702: Detect feature points in the high definition images, and perform intra-frame matching and inter-frame matching based on the feature points in the high definition images to determine matching feature point pairs.

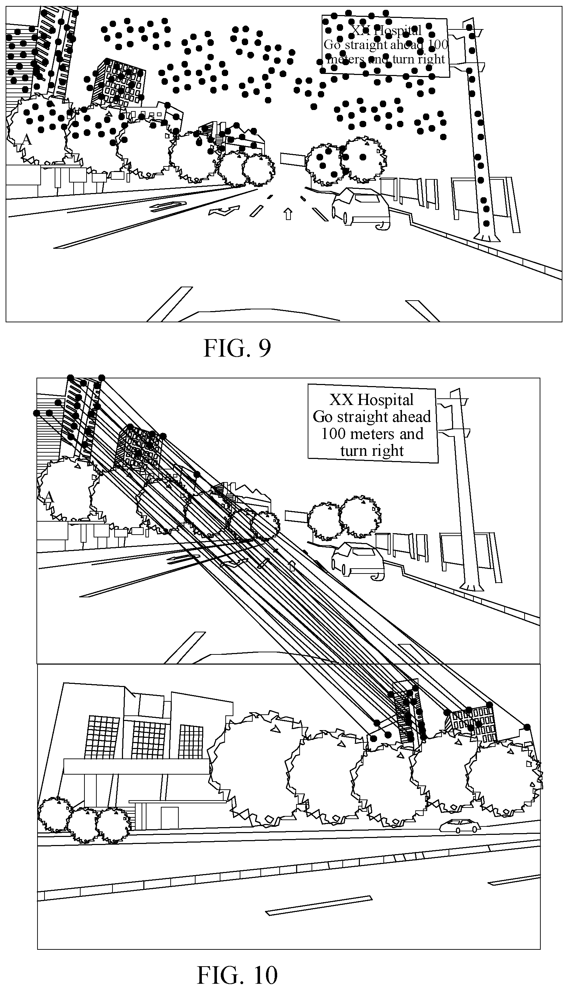

After obtaining the high definition images acquired by the cameras mounting on the high definition device, the server may detect feature points for each high definition image. For example, the received high definition images may be processed by using a feature point detection model or a feature point detection algorithm such as superpoint and SIFT, to determine the feature points included in the high definition image. FIG. 9 is a schematic diagram showing feature points in a high definition image according to an embodiment of the present disclosure. Black dots in the figure are the determined feature points.

Furthermore, the server may determine the matching feature point pairs based on the feature points in the high definition image by using the intra-frame matching and the inter-frame matching. To be specific, feature points having matching relationships in two different high definition images are determined. For example, a feature point matching algorithm such as superglue and SIFT may be used to determine feature points having matching relationships in two high definition images.

The intra-frame matching means that matching processing is performed on feature points in high definition images shot by different cameras at a same moment. The high definition device shown in FIG. 8 is used as an example. An applied intra-frame matching strategy may be that feature points in high definition images acquired by a camera 1 are matched with feature points in high definition images acquired by a camera 2, the feature points in the high definition images acquired by the camera 2 are matched with feature points in high definition images acquired by a camera 3, the feature points in the high definition images acquired by the camera 3 are matched by feature points in high definition images acquired by a camera 4, the feature points in the high definition images acquired by the camera 4 are matched with feature points in high definition images acquired by a camera 5, and the feature points in the high definition images acquired by the camera 5 are matched with the feature points in the high definition images acquired by the camera 1. FIG. 10 is a schematic diagram showing exemplary intra-frame matching according to an embodiment of the present disclosure. FIG. 10 shows a matching circumstance of the feature points in the high definition images shot at a same moment by the camera 1 (a front view camera, for which the corresponding high definition images are shown in the upper section in FIG. 10) and the camera 2 (a front left camera, for which the corresponding high definition images are shown in the lower section in FIG. 10).

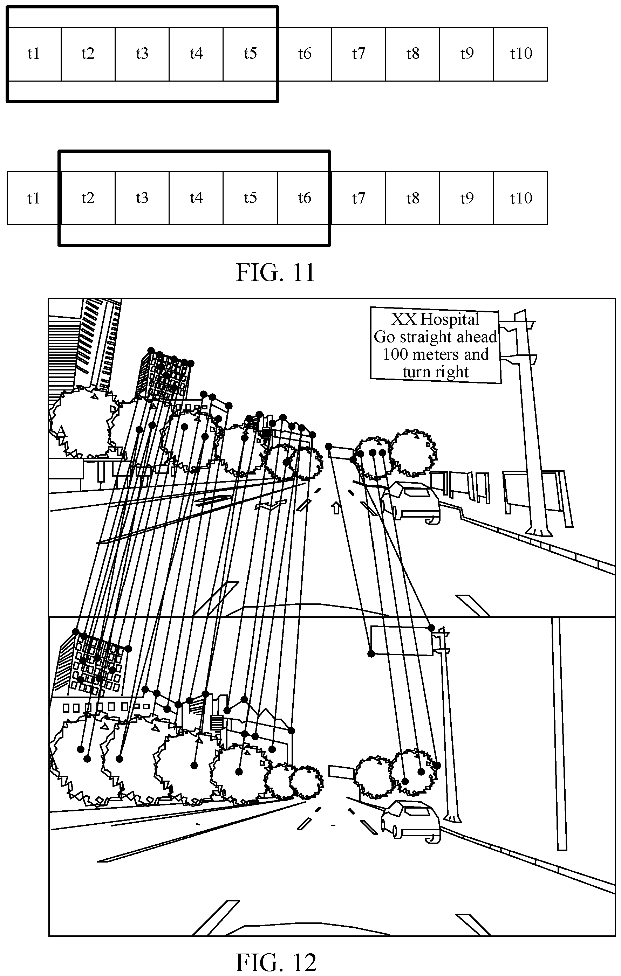

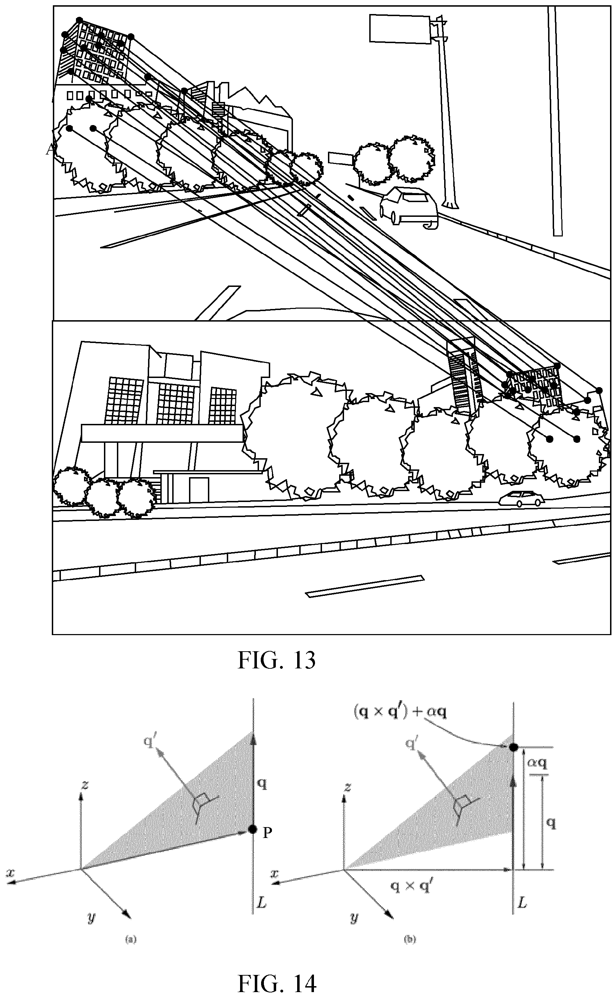

The inter-frame matching means that matching processing is performed on feature points in high definition images shot by same or different cameras at different moments. The embodiments of the present disclosure may perform the inter-frame matching based on a sliding-window algorithm. In other words, a window with a fixed time length is set, feature point matching is performed on high definition images acquired by all cameras in a period of time corresponding to the window, and by moving the window continuously, inter-frame matching is implemented between more high definition images. FIG. 11 is a schematic diagram showing a sliding-window algorithm according to an embodiment of the present disclosure. As shown in FIG. 11, within a window 1101, the server needs to perform matching processing on feature points included in each high definition image acquired by each camera at a t5 moment with feature points in each high definition image acquired by each camera at a t1 moment to a t4 moment. Within a window 1102, the server needs to perform matching processing on feature points in each high definition image acquired by each camera at a t6 moment with feature points in each high definition image acquired by each camera at a t2 moment to the t5 moment, and so on. FIG. 12 and FIG. 13 are schematic diagrams of exemplary inter-frame matching according to the embodiments of the present disclosure. FIG. 12 shows a matching circumstance of feature points in high definition images shot by a same camera at different moments, and FIG. 13 shows a matching circumstance of feature points in high definition images shot by different cameras at different moments.

In some embodiments, to improve reliability of the matching feature point pairs determined in step 702, in the embodiments of the present disclosure, pre-processing may be performed on the received high definition images before the performing intra-frame matching and inter-frame matching based on the feature points in the high definition images to determine matching feature point pairs. In other words, for each high definition image, the server may determine a texture repetition element and a dynamic obstacle element in the high definition image by using a segmentation model, and mask the texture repetition element and the dynamic obstacle element in the high definition image. Furthermore, the server performs the intra-frame matching and the inter-frame matching based on feature points in masked high definition images, to determine the matching feature point pairs.

Specifically, there are many texture repetition elements (such as road ground) and dynamic obstacle elements (such as vehicles and pedestrians on the road) in high definition images corresponding to an outdoor scenario acquired by the cameras on the high definition device. The texture repetition elements and the dynamic obstacle elements cannot effectively function as a positioning reference in an outdoor scenario positioning application, and may even affect accuracy of a determined positioning result. Therefore, in the embodiments of the present disclosure, the texture repetition elements and the dynamic obstacle elements in the high definition images may be masked first before the feature point matching is performed on the high definition images, to avoid an impact of mismatching between feature points corresponding to the texture repetition elements and the dynamic obstacle elements in the high definition images on accuracy of three-dimensional position information of feature points in high definition images determined subsequently.

For example, a segmentation model (such as a Mask RCNN model) may be applied to detect the texture repetition elements and the dynamic obstacle elements in the high definition images, and segment the detected texture repetition elements and dynamic obstacle elements from the high definition images by using the segmentation model, that is, mask the texture repetition elements and the dynamic obstacle elements in the high definition images. Correspondingly, when the intra-frame matching and the inter-frame matching are performed based on the feature points in the high definition images, feature points on the masked elements are not matched. In this way, computing resources required for subsequent processing can be reduced to some extent, and mismatching feature point pairs can be reduced. This helps to improve accuracy of three-dimensional position information of feature points in subsequently determined high definition images.

Step 703: Perform an outlier removal operation based on the matching feature point pairs to obtain inlier matching feature point pairs.

Matching feature point pairs having unreliable matching relationships determined in step 702 may be included in the determined matching feature point pairs, that is, outlier matching feature point pairs, and the outlier matching feature point pairs may affect accuracy and reliability of subsequent calculation. Therefore, the server needs to perform the outlier removal operation based on the matching feature point pairs determined in step 702, to remove the outlier matching feature point pairs having the unreliable matching relationships, and only retain the inlier matching feature point pairs having reliable matching relationships.

In a possible implementation, the embodiments of the present disclosure creatively provide a manner of performing outlier removal operation based on a generic camera model essential matrix (G matrix). In other words, for each matching feature point pair, the server may determine a rotation parameter and a translation parameter corresponding to the matching feature point pair. Then, the server determines, according to the rotation parameter and the translation parameter, a generic camera model essential matrix corresponding to the matching feature point pair. Furthermore, the server detects, according to the generic camera model essential matrix and light representations corresponding to feature points in the matching feature point pair, whether the matching feature point pair belongs to the inlier matching feature point pairs.

FIG. 14 is a schematic diagram showing deriving a G matrix formula according to an embodiment of the present disclosure. FIG. 14 shows Plucker coordinates. A point P represents a three-dimensional point, and corresponds to three-dimensional position information in a world coordinate system of an acquisition camera for high definition images. q represents a direction vector of camera light (projection ray), which may be calculated according to position information of a pixel point in an image coordinate system and a camera intrinsic parameter. Three-dimensional points on the camera light have a scale factor $\alpha$ on a camera light direction.

The Plucker coordinates is common expression of a three-dimensional line. As shown in FIG. 14, q represents a direction vector of a line, and P represents a three-dimensional point on the line. In this case, q' = P $\times$ q represents a normal vector of a plane formed by an origin point and the line, and $q^Tq' = 0$. In this case, a formula of the three-dimensional point on the line may be represented as the following Formula (2):

$$(q \times q') + \alpha q \qquad (2)$$

Light L of a camera $C_1$ in the Plucker coordinates may be represented as the following Formula (3):

$$L = \begin{pmatrix} q \\ q' \end{pmatrix} \qquad (3)$$

In this case, light L' at a same moment of a camera $C_1$ rigidly connected to the camera $C_2$, or light L' at another moment of the camera $C_1$ or the camera $C_2$ may be represented as the following Formula (4):

$$L' = \begin{pmatrix} Rq \\ (RP + t) \times (Rq) \end{pmatrix} = \begin{pmatrix} Rq \\ Rq' + t \times (Rq) \end{pmatrix} \qquad (4)$$

R and t respectively represent a rotation parameter and a translation parameter between the camera $C_1$ and the camera $C_2$, a rotation parameter and a translation parameter of the camera $C_1$ at different moments, or a rotation parameter and a translation parameter between the camera $C_1$ and the camera $C_2$ at different moments.

If the light $L = (q_1^T, q_1'^T)^T$ and $\text{light} = (q_2^T, q_2'^T)^T$ intersect at a point, a relationship shown in the following Formula (5) exists:

$$q_2^T q_1' + q_2'^T q_1 = 0 \qquad (5)$$

With reference to the foregoing Formula (4) and Formula (5), a relationship shown in the following Formula (6) is obtained:

$$q_2^T(Rq_1' + t \times (Rq_1)) + q_2'^T(Rq_1) = 0 \qquad (6)$$

The Formula (6) is simplified to obtain the following Formula (7):

$$q_2^T Rq_1' + q_2^T[t] \times Rq_1 + q_2'^T Rq_1 = 0 \qquad (7)$$

The Formula (7) is changed into a matrix form, to obtain the following Formula (8):

$$L_2^T G L_1 = \begin{pmatrix} q_2 \\ q'_2 \end{pmatrix}^T \begin{bmatrix} [t] \times R & R \\ R & 0 \end{bmatrix} \begin{pmatrix} q_1 \\ q'_1 \end{pmatrix} = 0 \qquad (8)$$

$G = \begin{bmatrix} [t] \times R & R \\ R & 0 \end{bmatrix}$ is a generic camera model essential matrix required by this outlier removal operation. R and t respectively represent a rotation parameter and a translation parameter of a same camera at different time sequences, a rotation parameter and a translation parameter of different cameras at a time sequence, or a rotation parameter and a translation parameter of different cameras at different time sequences.

In the embodiments of the present disclosure, a rotation parameter and a translation parameter in the foregoing G matrix are determined in the following manner: determining, in a case that the matching feature point pair is determined by using the intra-frame matching, acquisition cameras for high definition images to which the feature points in the matching feature point pair respectively belong, and determining, according to position relationship parameters between the acquisition cameras, the rotation parameter and the translation parameter corresponding to the matching feature point pair; or determining, in a case that the matching feature point pair is determined by using the inter-frame matching, an acquisition time difference of the high definition images to which the feature points in the matching feature point pair respectively belong, performing pre-integration on a motion parameter of the high definition device in a period of time corresponding to the acquisition time difference to obtain a reference rotation parameter and a reference translation parameter of the high definition device, and determining, according to the reference rotation parameter and the reference translation parameter, the rotation parameter and the translation parameter corresponding to the matching feature point pair.

Specifically, for the matching feature point pair of which the matching relationships are determined by using the intra-frame matching, the server may determine an acquisition camera for high definition images to which the feature points in the matching feature point pair respectively belong, that is, a camera of the high definition images to which the acquired feature points belong. Then, a rotation parameter and a translation parameter between two acquisition cameras are determined according to the position relationship parameters between the cameras marked on the high definition device, and are applied in the formula of the foregoing G matrix, to obtain a G matrix for detecting whether the matching feature point pair belongs to the inlier matching feature point pairs.

For the matching feature point pair of which the matching relationships are determines by using the inter-frame matching, the server may perform the pre-integration on the motion parameter of the high definition device, to determine a reference rotation parameter and a reference translation parameter corresponding to the matching feature point pair. Specifically, formulas for performing the pre-integration on the motion parameter are as shown in the following Formula (9), Formula (10), and Formula (11):

$$p_{t+1} = p_t + v\Delta t + \frac{1}{2}(R(a_m - a_b) + g)\Delta t^2 \qquad (9)$$

$$v_{t+1} = v_t + (R(a_m - a_b) + g)\Delta t \qquad (10)$$

$$q_{t+1} = q_t \otimes q((\omega_t - \omega_b)\Delta t) \qquad (11)$$

$p_{t+1}$ and $p_t$ respectively represent positions of the high definition device at a t+1 moment and a t moment, $v_{t+1}$ and $v_t$ respectively represent speeds of the high definition device at the t+1 moment and the t moment, $q_{t+1}$ and $q_t$ respectively represent rotation angles (generally represented as a four-tuple) of the high definition device at the t+1 moment and the t moment, v is an actual wheel speed of the high definition device, $a_m$ and $a_b$ respectively represent an acceleration and an acceleration error actually detected, $\Delta t$ is a time difference between the t+1 moment and the t moment, R is a rotation parameter detected by an IMU of the high definition device, g is a gravity acceleration, q is a rotation angle detected by the IMU, and $\omega_t$ and $\omega_b$ respectively represent an angular velocity and an angular velocity error actually measured.

In the embodiments of the present disclosure, for the matching feature point pair of which the matching relationships are determined by using the inter-frame matching, the reference translation parameter corresponding to the matching feature point pair may be determined according to $(p_a - P_b)$. a and b each represent an acquisition time of the high definition images to which two feature points in the matching feature point pair respectively belong, and $p_a$ and $p_b$ respectively represent positions of the high definition device at the a moment and the b moment. The reference rotation parameter corresponding to the matching feature point pair may be determined according to $(q_a - q_b)$. $q_a$ and $q_b$ respectively represent a rotation angle of the high definition device at the a moment and the b moment.

For each matching feature point pair determined by performing the inter-frame matching based on high definition images acquired by a same camera, the server may directly introduce the reference rotation parameter and the reference translation parameter corresponding to the matching feature point pair determined by the foregoing manners into the formula of the G matrix, to obtain a G matrix for detecting whether the matching feature point pair belongs to the inner matching feature point pairs. For each matching feature point pair determined by performing the inter-frame matching based on high definition images acquired by different cameras, the server further needs to fuse a position relationship parameter between two high definition images of the acquisition cameras based on the reference rotation parameter and the reference translation parameter corresponding to the matching feature point pair, to determine a G matrix for detecting whether the matching feature point pair belongs to the inlier matching feature point pairs.

After the G matrix corresponding to the matching feature point pairs is determined, light representations of feature points in the matching feature point pair and the G matrix corresponding to the matching feature point pair may be introduced into the $\begin{pmatrix} q_2 \\ q'_2 \end{pmatrix}^T \begin{bmatrix} [t] \times R & R \\ R & 0 \end{bmatrix} \begin{pmatrix} q_1 \\ q'_1 \end{pmatrix}$ in the foregoing Formula 8, to calculate a matching degree between two feature points in the matching feature point pair. If the calculated matching degree satisfies a preset matching condition (such as less than a preset threshold), it may be determined that the matching feature point pair belongs to the inlier matching feature point pairs. On the contrary, if the calculated matching degree does not satisfy a preset matching condition, it may be determined that the matching feature point pairs belongs to the outlier matching feature point pairs and needs to be removed.

Through an experiment, the outlier matching feature point pairs can be removed effectively. By using the foregoing outlier removal operation in the experiment, a quantity of the matching feature point pairs decreases from 208 to 183, and there is no mismatching in the retained inlier matching feature point pairs basically. Compared with conventional outlier removal based on an epipolar line, in the outlier removal based on the G matrix provided in the embodiments of the present disclosure, outlier matching feature point pairs in a texture repetition region in an image can be effectively removed, and a better outlier removal effect is presented.

In actual application, the server can remove the outlier matching feature point pairs in the matching feature point pairs by using other manners than the foregoing manners, which is not limited in the present disclosure.

Step 704: Perform triangulation calculation according to the inlier matching feature point pairs and a pose corresponding to a high definition image to which feature points in the inlier matching feature point pairs belong, to determine three-dimensional position information in a world coordinate system of the feature points in the inlier matching feature point pairs, the pose corresponding to the high definition image being a pose of a camera acquiring the high definition image during acquisition of the high definition image.

After removing the outlier matching feature point pairs in the matching feature point pairs in step 703, the server may further perform triangulation calculation according to two-dimensional position information in an image coordinate system of feature points in the inlier matching feature point pairs and a pose corresponding to a high definition image to which the feature points in the inlier matching feature point pair belong, to determine three-dimensional position information in the world coordinate system of the feature points in the inlier matching feature point pairs. The pose corresponding to the high definition image may be understood as that a position and an attitude of the camera acquiring the high definition image during acquisition of the high definition image. In the embodiments of the present disclosure, the position and the attitude of the high definition device may be determined by using the pre-integration described in the foregoing step 702. Correspondingly, determine a position and an attitude of the camera according to a deployment position of the camera on the high definition device.

The triangulation calculation is also referred to as triangulation measurement, and refers to an algorithm determining a depth value of a feature point based on an included angle of the feature point in three-dimensional space observed from different positions. In the embodiments of the present disclosure, in a case that poses corresponding to the high definition images and two-dimensional position information of feature points having matching relationships in the image coordinate system in the high definition images are known, three-dimensional position information of the feature points having the matching relationships in the world coordinate system can be determined by using triangulation calculation.

Three-dimensional position information of the feature points in the world coordinate system can reflect positions of actual elements (for example, elements in the real world such as a building, a tree, and a sign) belonging to the feature points in the world coordinate system. Positions of these actual elements in the world coordinate system may be used as references to perform vision positioning in an outdoor scenario, to assist in determining a high-precision positioning result of a to-be-positioned device in the outdoor scenario.

In some embodiments, a cumulative error may exist when the pose of the high definition device is determined by performing the pre-integration on the motion parameter. To avoid an impact of the cumulative error on accuracy and reliability of the three-dimensional position information of the determined feature points, in the embodiments of the present disclosure, the server may eliminate, every preset period of time based on an RTK carrier-phase differential technology, the cumulative error of the pose of the high definition device determined by using the pre-integration.

For example, the cumulative error may be eliminated based on the RTK by using the following Formula (12):

$$\min_{\mathbf{x}} \frac{1}{2} \left( \left\| r_p(x) \right\|^2 + \sum_{m \in \mathbf{m}_{L\alpha}} \left\| r_L(m, X) \right\|_{C_{L\alpha}^m}^2 + \sum_{\beta \in p,\dots,j-1} \left\| r_B(z_{\beta+1}^{\beta}, X) \right\|^2 \right) \quad (12)$$

$r_p(x)$ is a residual corresponding to a prior factor generated by marginalization, $f_L(m, X)$ is a residual corresponding to point cloud feature matching, which can be understood as a visual re-projection error in the embodiments of the present disclosure, and $r_B(z_{\beta+1}^{\beta}, X)$ is a residual generated by IMU pre-integration.

The cumulative error during pre-integration may be eliminated by constraining an absolute pose by using a pose of an RTK, so as to construct a pose image to optimize the pose of the high definition device to eliminate the cumulative error of the pre-integration.

According to the embodiments of the present disclosure, initial constructing of the visual fingerprint database can be completed through step 701 to step 704, that is, the visual fingerprint database is constructed based on the high definition images acquired by the high definition device. The visual fingerprint database stores the high definition images corresponding to the outdoor scenario acquired by the high definition device and the three-dimensional position information of the feature points in the world coordinate system in the high definition images.

In addition, in the embodiments of the present disclosure, data stored in the visual fingerprint database may be updated according to standard definition images acquired by a common device, to ensure that the data stored in the visual fingerprint database has both precision and freshness. Specifically, the server may update, in the following manners, the data stored in the visual fingerprint database according to the standard definition images acquired by the common device: obtaining the standard definition images acquired by the common device; determining to-be-updated high definition images (also referred to as "target high definition images") matching the standard definition images in the visual fingerprint database; determining, by using an epipolar line search technology according to the standard definition images and the to-be-updated high definition images, associated elements existing in both the standard definition images and the to-be-updated high definition images; and adjusting update time of three-dimensional position information of feature points corresponding to the associated elements in the visual fingerprint database to acquisition time of the standard definition images.

For example, the server may receive the acquired standard definition images from the common device. The common device herein may be a device having a positioning capability but with low positioning precision, for example, a vehicle provided with an event data recorder. In the embodiments of the present disclosure, the vehicle may upload standard definition images acquired by the event data recorder mounted on the vehicle to the server by a vehicle-mounted computer mounted on the vehicle. In addition, to facilitate quick determining of the to-be-updated high definition images matching the standard definition images by the server, the vehicle-mounted computer may alternatively upload to the server a low-precision positioning result when the vehicle acquires the standard definition images. After obtaining the standard definition images and the low-precision positioning result uploaded by the common device, the server may first search the visual fingerprint database for the high definition images corresponding to the low-precision positioning result according to the low-precision positioning result first. Then, the server may use all the high definition images corresponding to the low-precision positioning result as the to-be-updated high definition images. Alternatively, the server may select high definition images having a high matching degree with the standard definition images from the high definition images corresponding to the low-precision positioning result as the to-be-updated high definition images. A specific manner for selecting the to-be-updated high definition images is similar to a manner for selecting the reference high definition image matching the first image in the embodiments shown in FIG. 2.

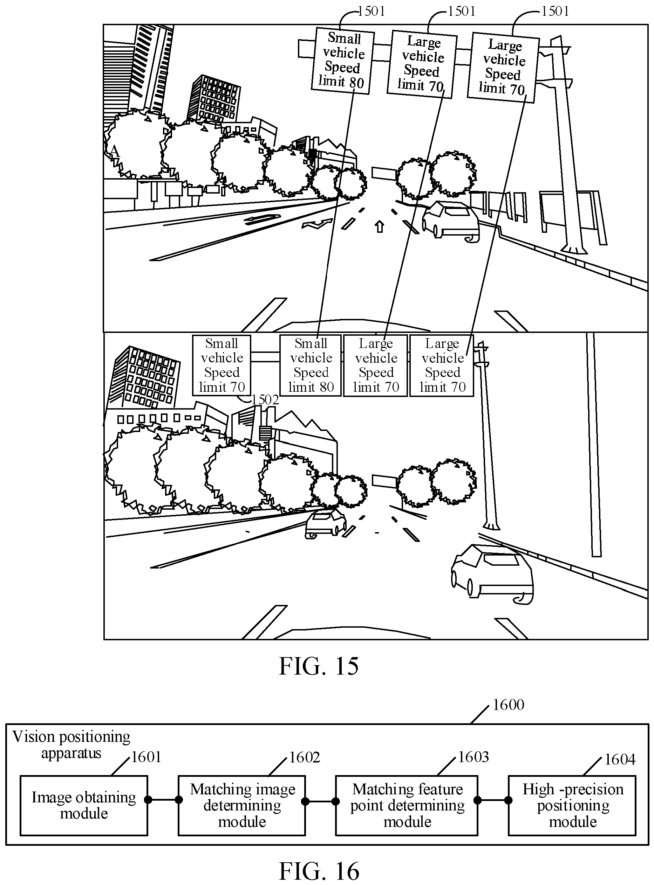

Furthermore, the server may use the epipolar line search technology to determine elements existing both in both the standard definition images and the to-be-updated high definition images, and use the elements as associated elements. FIG. 15 is a schematic diagram showing determining associated elements in standard definition images and to-be-updated high definition images according to an embodiment of the present disclosure. As shown in FIG. 15, the server may perform data differential based on the standard definition images and the to-be-updated high definition images by using the epipolar line search technology, and elements 1501 may be determined as associated elements existing both in the standard definition images and the to-be-updated high definition images. For the associated elements, the server may consider that the associated elements still exist in the real world when the standard definition images are acquired, and positions are not changed. Therefore, update time of three-dimensional position information of feature points corresponding to the associated elements in the visual fingerprint database is adjusted to acquisition time of the standard definition images. The update time of the three-dimensional position information of the feature points herein is time for indicating whether last detection for the feature points is valid. Adjusting the update time to the acquisition time of the standard definition images indicates that the three-dimensional position information of the feature points is still valid at the acquisition time of the standard definition images.

Updating the update time of the three-dimensional position information of the feature points according to the acquisition time of the standard definition images facilitates reliability consideration of the three-dimensional position information of the feature points during actual vision positioning. If the vision positioning is actually performed, and it is observed that update time of three-dimensional position information of a specific feature points used is to be early, it indicates that reliability of the three-dimensional position information of the feature point is low. Therefore, confidence of the three-dimensional position information of the feature point can be reduced, in other words, consideration degree for the three-dimensional position information of the feature point when the vision positioning is performed can be reduced, so as to avoid an impact of the three-dimensional position information of the feature point on accuracy and reliability of the determined positioning result.

In addition, in a case that non-associated elements exist in the standard definition images, the server needs to determine three-dimensional position information of the non-associated elements in the world coordinate system according to a plurality of standard definition images including the non-associated elements and poses corresponding to the plurality of standard definition images, and the non-associated elements are reconstructed in the to-be-updated high definition images. The non-associated elements are elements that exist in the standard definition images and do not exist in the to-be-updated high definition images, and the poses corresponding to the standard definition images are poses of the common device acquiring the standard definition images during acquisition of the standard definition images.

In actual application, there are complex and various outdoor scenarios, and the outdoor scenarios may change due to factors such as weather changes or urban planning. For example, other elements are often newly added to the outdoor scenarios compared to high definition image acquisition. For this case, in the embodiments of the present disclosure, the newly added elements may be reconstructed, based on standard definition images received subsequently, in the to-be-updated high definition images corresponding to the standard definition images. In other words, non-associated elements that exist in the standard definition images and do not exist in the to-be-updated high definition images may be reconstructed.

For example, as shown in FIG. 15, elements matching elements 1502 in the to-be-updated high definition images are not found by the server by using the epipolar line search technology, so that the elements in the standard definition images are determined as the non-associated elements. Furthermore, the server may obtain a plurality of standard definition images including the non-associated elements, and the plurality of standard definition images may be from a same common device or different common devices. Then, by using triangulation calculation, three-dimensional position information in the world coordinate system of feature points corresponding to the non-associated elements is determined according to two-dimensional position information of the feature points corresponding to the non-associated elements respectively belonging to the standard definition images in the plurality of standard definition images and poses corresponding to the plurality of standard definition images. An implementation of the three-dimensional position information in the world coordinate system of the feature points of the non-associated elements is similar to an implementation of determining three-dimensional position information in the world coordinate system of the feature points based on the high definition images. For details, refer to the foregoing description. Furthermore, the server may three-dimensionally reconstruct the non-associated elements in the to-be-updated high definition images according to the three-dimensional position information in the world coordinate system of the feature points corresponding to the non-associated elements, to implement supplement of the visual fingerprint database.

Because the three-dimensional position information in the world coordinate system of the feature points of the non-associated elements is determined according to the pose of the common device, the three-dimensional position information of these feature points has lower precision compared to the three-dimensional position information of the feature points in the high definition images. When the vision positioning is actually performed, if the three-dimensional position information of these feature points needs to be applied in positioning, confidence of the three-dimensional position information of these feature points may be reduced appropriately, so as to avoid reducing precision of the determined positioning result due to the three-dimensional position information of these feature points.

According to the method for constructing the visual fingerprint database provided in the embodiments of the present disclosure, three-dimensional position information of feature points in a world coordinate system in high definition images may be determined based on the high definition images acquired by a high definition device, and a visual fingerprint database is constructed on this basis. Data stored in the visual fingerprint database may alternatively be updated according to standard definition images acquired by a common device. Because costs of the common device acquiring the standard definition images are low, the standard definition images acquired by the common device can be obtained frequently, and the data stored in the visual fingerprint database can be updated by using the obtained standard definition images. In this way, the data stored in the visual fingerprint database has both high precision and freshness, and can be better applied to positioning in complex and various outdoor scenarios.

For the vision positioning method described above, the present disclosure further provides a corresponding vision positioning apparatus, so that the foregoing vision positioning method can be applied and implemented in practice.

Refer to FIG. 16. FIG. 16 is a schematic structure diagram of a vision positioning apparatus 1600 corresponding to the vision positioning method shown in FIG. 2. As shown in FIG. 16, the vision positioning apparatus 1600 includes:

an image obtaining module 1601, configured to obtain a first image acquired by an image acquisition device at a reference position;

a matching image determining module 1602, configured to determine, in high definition images corresponding to the reference position, a reference high definition image matching the first image, positioning precision of each pre-stored high definition image being higher than that of the first image;

a matching feature point determining module 1603, configured to determine, according to feature points having matching relationships in the first image and the reference high definition image, target matching feature point pairs; and

a high-precision positioning module 1604, configured to determine, according to position information of the feature points belonging to the reference high definition image in the target matching feature point pairs and position information of the feature points belonging to the first image in the target matching feature point pairs, a positioning result corresponding to the image acquisition device.

In some embodiments, the matching feature point determining module 1603 is specifically configured to:

construct candidate matching feature point pairs based on the feature points having the matching relationships in the first image and the reference high definition image;

perform a plurality of first-level outlier removal operations based on the candidate matching feature point pairs, the first-level outlier removal operation including: selecting basic matching feature point pairs in the candidate matching feature point pairs; determining a predicted pose of the image acquisition device according to the basic matching feature point pairs; and determining a removal result and a removal effect of the first-level outlier removal operation according to the predicted pose and the candidate matching feature point pairs; and

determine a target first-level outlier removal operation having an optimal removal effect in the plurality of first-level outlier removal operations, and determine the target matching feature point pairs according to a removal result of the target first-level outlier removal operation.

In some embodiments, the matching feature point determining module 1603 is specifically configured to:

determine candidate matching feature point pairs retained after the target first-level outlier removal operation as reference matching feature point pairs;

perform a plurality of second-level outlier removal operations based on the reference matching feature point pairs, the second-level outlier removal operation including: determining, according to an assumed rotation parameter, an assumed translation parameter, and three-dimensional position information of feature points belonging to the reference high definition image in the reference matching feature point pairs, two-dimensional position information of the feature points belonging to the reference high definition image; and determining a removal result and a removal effect of the second-level outlier removal operation according to the two-dimensional position information of the feature points belonging to the reference high definition image and two-dimensional position information of feature points belonging to the first image in the reference matching feature point pairs; and

determine a target second-level outlier removal operation having an optimal removal effect in the plurality of second-level outlier removal operations, and determine the target matching feature point pairs according to a removal result of the target second-level outlier removal operation.

In some embodiments, the high-precision positioning module 1604 is configured to:

determine a projection error according to three-dimensional position information of the feature points belonging to the reference high definition image in the target matching feature point pairs, two-dimensional position information of the feature points belonging to the first image in the target matching feature point pairs, a camera intrinsic parameter of the image acquisition device, and an attitude parameter and a position parameter of the image acquisition device; and

optimize the attitude parameter and the position parameter of the image acquisition device by minimizing the projection error, and determine the positioning result according to an optimized attitude parameter and an optimized position parameter of the image acquisition device.

In some embodiments, the apparatus further includes a fingerprint database constructing module. The fingerprint database constructing module includes:

a high definition image obtaining unit, configured to obtain high definition images acquired respectively by a plurality of cameras rigidly connected to a high definition device;

a feature point matching unit, configured to detect feature points in the high definition images, and perform intra-frame matching and inter-frame matching based on the feature points in the high definition images to determine matching feature point pairs;

an outlier removal unit, configured to perform an outlier removal operation based on the matching feature point pairs to obtain inlier matching feature point pairs; and

a position information determining unit, configured to perform triangulation calculation according to the inlier matching feature point pairs and a pose corresponding to a high definition image to which feature points in the inlier matching feature point pairs belong, to determine three-dimensional position information in a world coordinate system of the feature points in the inlier matching feature point pairs, the pose corresponding to the high definition image being a pose of a camera acquiring the high definition image during acquisition of the high definition image.

In some embodiments, the outlier removal unit is specifically configured to:
determine, for each matching feature point pair, a rotation parameter and a translation parameter corresponding to the matching feature point pair; determine, according to the rotation parameter and the translation parameter, a generic camera model essential matrix corresponding to the matching feature point pair; and detect, according to the generic camera model essential matrix and light representations corresponding to feature points in the matching feature point pair, whether the matching feature point pair belongs to the inlier matching feature point pairs.
In some embodiments, the outlier removal unit is specifically configured to:

determine, in a case that the matching feature point pair is determined by using the intra-frame matching, acquisition cameras for high definition images to which the feature points in the matching feature point pair respectively belong, and determine, according to position relationship parameters between the acquisition cameras, the rotation parameter and the translation parameter corresponding to the matching feature point pair; or

determine, in a case that the matching feature point pair is determined by using the inter-frame matching, an acquisition time difference between the high definition images to which the feature points in the matching feature point pair respectively belong, perform pre-integration on a motion parameter of the high definition device in a period of time corresponding to the acquisition time difference to obtain a reference rotation parameter and a reference translation parameter of the high definition device, and determine, according to the reference rotation parameter and the reference translation parameter, the rotation parameter and the translation parameter corresponding to the matching feature point pair.

In some embodiments, the fingerprint database constructing module further includes:
a segmentation unit, configured to: before the performing intra-frame matching and inter-frame matching based on the feature points in the high definition images to determine matching feature point pairs, determine, for each high definition image, a texture repetition element and a dynamic obstacle element in the high definition image by using a segmentation model, and mask the texture repetition element and the dynamic obstacle element in the high definition image.
In this case, the feature point matching unit is specifically configured to:
perform the intra-frame matching and the inter-frame matching based on feature points in masked high definition images, to determine the matching feature point pairs.
In some embodiments, the fingerprint database constructing module further includes:
an error eliminating unit, configured to eliminate, every preset period of time based on a carrier-phase differential technology, a cumulative error of a pose of the high definition device determined by using the pre-integration.
In some embodiments, the fingerprint database constructing module further includes:

a standard definition image obtaining unit, configured to obtain standard definition images acquired by a common device;

a standard definition image matching unit, configured to determine to-be-updated high definition images matching the standard definition images in the visual fingerprint database;

an associated element determining unit, configured to determine, by using an epipolar line search technology according to the standard definition images and the to-be-updated high definition images, that associated elements exist in both the standard definition images and the to-be-updated high definition images; and

a data update unit, configured to adjust update time of three-dimensional position information of feature points corresponding to the associated elements in the visual fingerprint database to acquisition time of the standard definition images.

In some embodiments, the data update unit is further configured to:
determine, in a case that non-associated elements exist in the standard definition images, three-dimensional position information in the world coordinate system of the non-associated elements according to a plurality of standard definition images including the non-associated elements and poses corresponding to the plurality of standard definition images, and reconstruct the non-associated elements in the to-be-updated high definition images, the non-associated elements being elements that exist in the standard definition images and do not exist in the to-be-updated high definition images, and the poses corresponding to the standard definition images being poses of the common device acquiring the standard definition images during acquisition of the standard definition images.

According to the vision positioning apparatus in the embodiments of the present disclosure, high-precision positioning in an outdoor scenario is implemented based on a visual fingerprint database storing high definition images corresponding to the outdoor scenario and three-dimensional position information in a world coordinate system of feature points in the high definition images. In addition, data stored in the visual fingerprint database may be updated according to standard definition images acquired by a common device. Because costs of the common device acquiring the standard definition images are low, the standard definition images acquired by the common device can be obtained frequently, and the data stored in the visual fingerprint database can be updated by using the obtained standard definition images. In this way, the data stored in the visual fingerprint database has both high precision and freshness, and can be better applied to positioning in complex and various outdoor scenarios. When positioning is performed based on the visual fingerprint database, according to low-precision position information of a to-be-positioned image acquisition device, a reference high definition image matching a first image acquired by the image acquisition device at the low-precision position information may be determined first in high definition images corresponding to the low-precision position information stored in the visual fingerprint database. Then, target matching feature point pairs are determined according to feature points having matching relationships in the first image and the reference high definition image, and high-precision positioning information of the image acquisition device is determined according to three-dimensional position information in a world coordinate system of the feature points belonging to the reference high definition image in the target matching feature point pairs and two-dimensional position information of the feature points in an image coordinate system belonging to the first image in the target matching feature point pairs. In this way, high-precision, high-efficiency, and high-reliability positioning of the image acquisition device in an outdoor scenario is implemented based on the visual fingerprint database.

An embodiment of the present disclosure further provides a computer device for implementing vision positioning. The computer device may be specifically a terminal device or a server. The following describes the terminal device and the server according to the embodiments of the present disclosure from the perspective of hardware materialization.

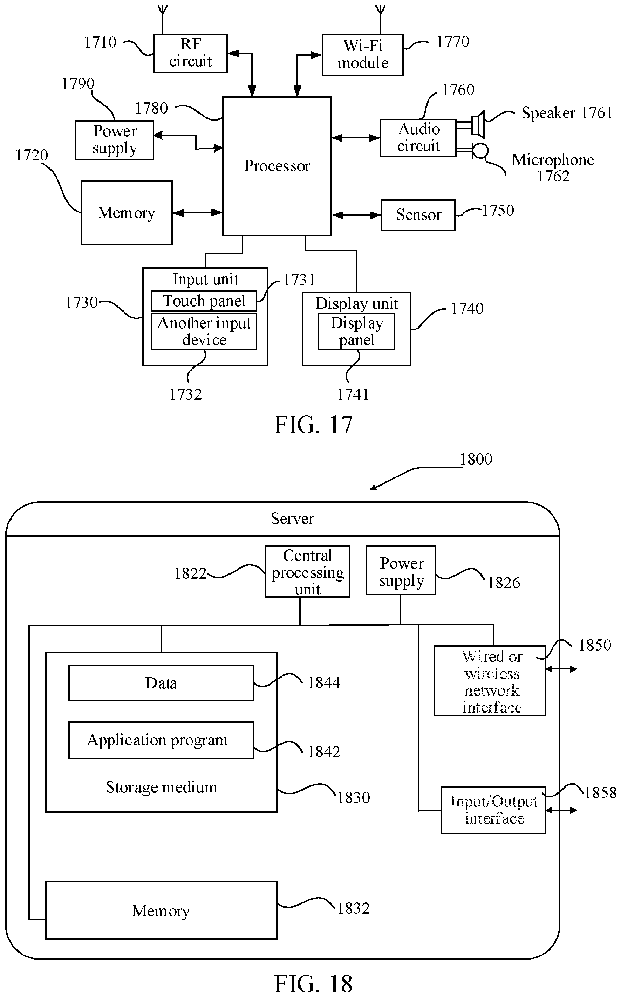

Refer to FIG. 17. FIG. 17 is a schematic structure diagram of a terminal device according to an embodiment of the present disclosure. As shown in FIG. 17, for convenience of explanation, only parts related to this embodiment of the present disclosure are shown. For specific technical details not disclosed, reference may be made to the method embodiments of the present disclosure. The terminal may be any terminal device such as a mobile phone, a tablet computer, a personal digital assistant (PDA), or a vehicle-mounted computer, and an example in which the terminal is a vehicle-mounted computer is used.

FIG. 17 is a block structure diagram of a part of a vehicle-mounted computer related to a terminal according to an embodiment of the present disclosure. Refer to FIG. 17. The vehicle-mounted computer includes components such as a radio frequency (RF) circuit 1710, a memory 1720, an input unit 1730 (including a touch panel 1731 and another input device 1732), a display unit 1740 (including a display panel 1741), a sensor 1750, an audio circuit 1760 (which may be connected to a speaker 1761 and a microphone 1762), a wireless fidelity (Wi-Fi) module 1770, a processor 1780, and a power supply 1790. A person skilled in the art may understand that the structure of the vehicle-mounted computer shown in FIG. 17 does not constitute a limitation to the vehicle-mounted computer, and may include more or fewer components than those shown in the figure, or some components may be combined, or a different component deployment may be used.

The memory 1720 may be configured to store a software program and a module. The processor 1780 runs the software program and the module that are stored in the memory 1720, to execute various functional applications and data processing of the vehicle-mounted computer. The memory 1720 may mainly include a program storage area and a data storage area. The program storage area may store an operating system, an application program that is required by at least one function (for example, a sound playback function and an image display function), and the like. The data storage region may store data (for example, audio data and a phone book) created according to use of the vehicle-mounted computer and the like. In addition, the memory 1720 may include a high-speed random access memory, and may alternatively include a non-volatile memory, for example, at least one magnetic disk storage device, a flash memory device, or another volatile solid-state storage device.

The processor 1780 is a control center of the vehicle-mounted computer, and connected to various parts of the vehicle-mounted computer by using various interfaces and lines. By running or executing the software program and/or the module stored in the memory 1720, and invoking data stored in the memory 1720, various functions and data processing of the vehicle-mounted computer are performed. In some embodiments, the processor 1780 may include one or more processing units. Preferably, the processor 1780 may integrate an application processor and a modem processor. The application processor mainly processes an operating system, a user interface, an application program, and the like. The modem processor mainly processes wireless communication. The foregoing modem processor may alternatively not be integrated into the processor 1780.

In this embodiment of the present disclosure, the processor 1780 included in the terminal may further be configured to perform steps in any implementation of the vision positioning method according to the embodiments of the present disclosure.

Refer to FIG. 18. FIG. 18 is a schematic structure diagram of a server 1800 according to an embodiment of the present disclosure. The server 1800 may vary greatly due to different configurations or performance, and may include one or more central processing units (CPUs) 1822 (for example, one or more processors) and a memory 1832, and one or more storage media 1830 (for example, one or more mass storage devices) storing an application program 1842 or data 1844. The memory 1832 and the storage medium 1830 may be transient storage or persistent storage. A program stored in the storage medium 1830 may include one or more modules (not shown), and each module may include a series of instruction operations for the server. Further, the central processing unit 1822 may be configured to communicate with the storage medium 1830, and perform, on the server 1800, the series of instruction operations in the storage medium 1830.

The server 1800 may further include one or more power supplies 1826, one or more wired or wireless network interfaces 1850, one or more input/output interfaces 1858, and/or one or more operating systems, for example, Windows Server™, Mac OS X™, Unix™, Linux™, or FreeBSD™.

The steps performed by the server in the foregoing embodiments may be based on the server structure shown in FIG. 18.

The CPU 1822 may further be configured to perform steps in any implementation of the vision positioning method of the embodiments of the present disclosure.

An embodiment of the present disclosure further provides a computer-readable storage medium configured to store a computer program, the computer program being used for performing steps of any implementation of the vision positioning method according to the foregoing embodiments.

An embodiment of the present disclosure further provides a computer program product including a computer program, the computer program product, when run on a computer, enabling the computer to perform any implementation of the vision positioning method according to the foregoing embodiments.

A person skilled in the art can clearly understand that for convenience and conciseness of description, for specific working processes of the foregoing systems, apparatuses and units, reference may be made to the corresponding processes in the foregoing method embodiments, and details are not described herein again.

In the several embodiments provided in the present disclosure, it is to be understood that the disclosed systems, apparatuses, and methods may be implemented in other manners. For example, the apparatus embodiments described above are merely examples. For example, division into the units is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and components displayed as units may or may not be physical units, may be located in one place, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the related art, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes any medium that can store a computer program, such as a USB flash drive, a removable hard disk, a read-only memory (ROM), a random access memory (RAM), a magnetic disk, or an optical disc.

It should be understood that, in the present disclosure, "at least one" means one or more, and "a plurality of" means two or more. The term "and/or" describes only an association relationship between associated objects and represents that three relationships may exist. For example, "A and/or B" may represent the following three cases: Only A exists, only B exists, and both A and B exist. A may be singular or plural, and B may be singular or plural. The character "/" in this specification generally indicates an "or" relationship between the associated objects. "At least one of the following items" or a similar expression means any combination of these items, including a single item or any combination of a plurality of items. For example, "at least one of a, b, or c" may represent: a, b, c, "a and b", "a and c", "b and c", or "a and b and c", where a may be singular or plural, b may be singular or plural, and c may be singular or plural.

The foregoing embodiments are only provided for describing the technical solutions of the present disclosure, but not intended to limit the present disclosure. Although the present disclosure is described in detail with reference to the foregoing embodiments, a person skilled in the art understands that modifications may still be made to the technical solutions described in the foregoing embodiments, or equivalent replacements may be made to some technical features, and such modifications or replacements do not cause the essence of corresponding technical solutions to depart from the spirit and scope of the technical solutions in the embodiments of the present disclosure.

**Claims**

1.  A positioning method, executable by a computer device, the method comprising:

    obtaining a first image acquired by an image acquisition device at a reference position;

    determining, from one or more pre-stored high definition images corresponding to the reference position, a reference high definition image matching the first image with respect to at least one image parameter, positioning precision of each of the one or more pre-stored high definition images being higher than positioning precision of the first image;

    determining one or more target matching feature point pairs, each comprising a first feature point from the first image and a reference feature point from the reference high definition image that match each other with respect to feature matching; and

    obtaining a positioning result using first position information of the reference feature point and second position information of the first feature point in each of target matching feature point pairs.

2.  The method according to claim 1, wherein the determining one or more target matching feature point pairs comprises:

    constructing one or more candidate matching feature point pairs, each comprising a candidate first feature point in the first image and a candidate reference feature point in the reference high definition image that match each other respect to feature point;

    performing a plurality of first-level outlier removal operations based on the one or more candidate matching feature point pairs, each of the plurality of first-level outlier removal operations comprising:

       selecting one or more basic matching feature point pairs from the one or more candidate matching feature point pairs;

       determining a predicted pose of the image acquisition device according to the one or more basic matching feature point pairs; and

       determining a removal result and a removal effect of the first-level outlier removal operation according to the predicted pose and the candidate matching feature point pairs;

    determining, from the plurality of first-level outlier removal operations, a target first-level outlier removal operation having an optimal removal effect; and

    determining the one or more target matching feature point pairs according to a removal result of the target first-level outlier removal operation.

3. The method according to claim 2, wherein the determining the one or more target matching feature point pairs according to the removal result of the target first-level outlier removal operation comprises:

determining one or more of the one or more candidate matching feature point pairs retained after the target first-level outlier removal operation as one or more reference matching feature point pairs;

performing a plurality of second-level outlier removal operations based on the one or more reference matching feature point pairs, each of the plurality of second-level outlier removal operations comprising:

determining, according to an assumed rotation parameter, an assumed translation parameter, and three-dimensional position information of one or more reference feature points in the one or more reference matching feature point pairs, two-dimensional position information of the one or more reference feature points; and

determining a removal result and a removal effect of the second-level outlier removal operation according to the two-dimensional position information of the one or more reference feature points and two-dimensional position information of one or more first feature points in the one or more reference matching feature point pairs;

determining, from the plurality of second-level outlier removal operations, a target second-level outlier removal operation having an optimal removal effect ; and

determining the one or more target matching feature point pairs according to a removal result of the target second-level outlier removal operation.

4. The method according to any one of claims 1 to 3, wherein the determining the positioning result comprises:

determining a projection error according to three-dimensional position information of the reference feature point and two-dimensional position information of the first feature point in each of the one or more target matching feature point pairs, a camera intrinsic parameter of the image acquisition device, and an attitude parameter and a position parameter of the image acquisition device;

optimizing the attitude parameter and the position parameter of the image acquisition device by minimizing the projection error, to obtain an optimized attitude parameter and an optimized position parameter; and

determining the positioning result according to the optimized attitude parameter and the optimized position parameter.

5. The method according to any one of claims 1 to 4, wherein the one or more high definition images are pre-stored in a visual fingerprint database that is constructed by:

obtaining candidate high definition images acquired respectively by a plurality of cameras rigidly connected to a high definition device;

detecting feature points in the candidate high definition images;

performing intra-frame matching and inter-frame matching based on the feature points in the candidate high definition images to determine matching feature point pairs;

performing an outlier removal operation based on the matching feature point pairs to obtain inlier matching feature point pairs; and

performing triangulation calculation according to the inlier matching feature point pairs and a pose corresponding to a candidate high definition image to which feature points in the inlier matching feature point pairs belong, to determine three-dimensional position information in a world coordinate system of the feature points in the inlier matching feature point pairs, the pose being a pose of one or more cameras acquiring the candidate high definition image during acquisition of the candidate high definition image.

6. The method according to claim 5, wherein the performing the outlier removal operation comprises, for each matching feature point pair:

determining a rotation parameter and a translation parameter corresponding to the matching feature point pair;

determining, according to the rotation parameter and the translation parameter, a generic camera model essential matrix corresponding to the matching feature point pair; and

detecting, according to the generic camera model essential matrix and light representations corresponding to feature points in the matching feature point pair, whether the matching feature point pair is one of the inlier matching feature point pairs.

**7.** The method according to claim 6, wherein

for a matching point pair determined using the intra-frame matching, the determining the rotation parameter and the translation parameter corresponding to the matching feature point pair comprises:

determining acquisition cameras for candidate high definition images to which the feature points in the matching feature point pair respectively belong, and
determining, according to position relationship parameters between the acquisition cameras, the rotation parameter and the translation parameter corresponding to the matching feature point pair; or

for a matching feature point pair determined using the inter-frame matching, determining the rotation parameter and the translation parameter corresponding to the matching feature point pair comprises:

determining an acquisition time difference between candidate high definition images to which the feature points in the matching feature point pair respectively belong;
performing pre-integration on a motion parameter of the high definition device in a period of time corresponding to the acquisition time difference to obtain a reference rotation parameter and a reference translation parameter of the high definition device; and
determining, according to the reference rotation parameter and the reference translation parameter, the rotation parameter and the translation parameter corresponding to the matching feature point pair.

**8.** The method according to claim 5, wherein before the performing the intra-frame matching and the inter-frame matching based on the feature points in the candidate high definition images to determine the matching feature point pairs, the method further comprises:

for each candidate high definition image, determining a texture repetition element and a dynamic obstacle element in the candidate high definition image using a segmentation model, and masking the texture repetition element and the dynamic obstacle element in the candidate high definition image to obtain a masked candidate high definition image;
wherein performing the intra-frame matching and the inter-frame matching based on the feature points in the candidate high definition images to determine the matching feature point pairs comprises:
performing the intra-frame matching and the inter-frame matching based on feature points in the masked candidate high definition images, to determine the matching feature point pairs.

**9.** The method according to claim 5, wherein the method further comprises:
after every preset period of time, eliminating based on a carrier-phase differential technology, a cumulative error of a pose of the high definition device determined using pre-integration.

**10.** The method according to claim 5, wherein the method further comprises:

obtaining a standard definition image acquired by a common device;
determining, from the visual fingerprint database, a target high definition image matching the standard definition image;
determining, by using an epipolar line search technology according to the standard definition image and the high definition image, associated elements existing in both the standard definition image and the target high definition images; and
adjusting update time of three-dimensional position information of a feature point corresponding to the associated elements in the visual fingerprint database to acquisition time of the standard definition images.

**11.** The method according to claim 10, wherein the method further comprises:

determining, in response to a non-associated element existing in the standard definition image, three-dimensional position information, in the world coordinate system, of the non-associated element according to the standard definition image and a pose of the common device during acquisition of the standard definition image, the non-associated element being an element that exists in the standard definition image and does not exist in the target high definition image; and
reconstructing the non-associated element in the target high definition image.

**12.** A positioning apparatus, comprising:

an image obtaining module, configured to obtain a first image acquired by an image acquisition device at a reference position;

a matching image determining module, configured to determine, from one or more pre-stored high definition images corresponding to the reference position, a reference high definition image matching the first image with respect to at least one image parameter, positioning precision of each of the one or more pre-stored high definition image being higher than positioning precision of the first image;

a matching feature point determining module, configured to determine one or more target matching feature point pairs, each comprising a first feature point from the first image and a reference feature point from the reference high definition image that match each other respect to feature matching; and

a high-precision positioning module, configured to obtain a positioning result using first position information of the reference feature point and second position information of the first feature point in each of target matching feature point pairs.

**13.** A computer device, comprising a processor and a memory,

the memory being configured to store a computer program; and

the processor being configured to perform, according to the computer program, the vision positioning method according to any one of claims 1 to 11.

**14.** A computer-readable storage medium, configured to store a computer program, the computer program being used for performing the vision positioning method according to any one of claims 1 to 11.

**15.** A computer program product, comprising a computer program, the computer program, when executed by a processor, implementing the vision positioning method according to any one of claims 1 to 11.

Determine, in the high definition images corresponding to the reference position, a reference high definition image matching the target image

↓

Determine target matching feature point pairs in the target image and the reference high definition image

↓

Determine a high-precision positioning result according to position information of feature points in the target matching feature point pairs

—110

Target image of a reference position

—120

—130

Visual fingerprint database

High definition images corresponding to the reference position

## FIG. 1

Obtain a first image acquired by an image acquisition device at a reference position  — 201

↓

Determine, in pre-stored high definition images corresponding to the reference position, a reference high definition image matching the first image  — 202

↓

Determine target matching feature point pairs according to feature points having matching relationships in the first image and the reference high definition image  — 203

↓

Determine, according to position information of the feature points belonging to the reference high definition image in the target matching feature point pairs and position information of the feature points belonging to the first image in the target matching feature point pairs, a positioning result corresponding to the image acquisition device  — 204

## FIG. 2

FIG. 3

FIG. 4

a1

XXXX

301

XX Hospital
Go straight ahead
100 meters and
turn right

302

a2

FIG. 5

FIG. 6

| Obtain high definition images respectively acquired by a plurality of cameras rigidly connected to a high definition device | 701 |
|---|---|

↓

| Detect feature points in the high definition images, and perform intra-frame matching and inter-frame matching based on the feature points in the high definition images to determine matching feature point pairs | 702 |
|---|---|

↓

| Perform an outlier removal operation based on the matching feature point pairs to obtain inner matching feature point pairs | 703 |
|---|---|

↓

| Perform triangulation calculation according to the inner matching feature point pairs and a pose corresponding to a high definition image to which feature points in the inner matching feature point pairs belong, to determine three-dimensional position information in a world coordinate system of the feature points of the inner matching feature point pairs, the pose corresponding to the high definition image being a pose of a camera acquiring the high definition image during acquisition of the high definition image | 704 |
|---|---|

FIG. 7

FIG. 8

FIG. 9

FIG. 10

| | | | | | | | | | |
|----|----|----|----|----|----|----|----|----|-----|
| t1 | t2 | t3 | t4 | t5 | t6 | t7 | t8 | t9 | t10 |

| | | | | | | | | | |
|----|----|----|----|----|----|----|----|----|-----|
| t1 | t2 | t3 | t4 | t5 | t6 | t7 | t8 | t9 | t10 |

FIG. 11

FIG. 12

EP 4 502 950 A1

FIG. 13

FIG. 14

FIG. 15

FIG. 16

FIG. 17

FIG. 18

## INTERNATIONAL SEARCH REPORT

International application No.

**PCT/CN2023/123970**

### A. CLASSIFICATION OF SUBJECT MATTER

G06T 7/73(2017.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 视觉, 定位, 位置, 坐标, 图像, 参考, 当前, 精度, 高, 低, 匹配, 特征点, 点对, 外点, 滤除, 过滤, 位姿, 姿态, visual, position, coordinate, image, reference, current, definition, precision, high, low, match, point, pairs, outer, filter, remove, pose, gesture

### C. DOCUMENTS CONSIDERED TO BE RELEVANT

| Category* | Citation of document, with indication, where appropriate, of the relevant passages | Relevant to claim No. |
|---|---|---|
| X | CN 109186616 A (HOLOMATIC TECHNOLOGY (BEIJING) CO., LTD.) 11 January 2019 (2019-01-11) <br> description, paragraphs [0002]-[0081], and figures 1-3 | 1, 4-15 |
| A | CN 106447585 A (WUHAN UNIVERSITY) 22 February 2017 (2017-02-22) <br> entire document | 1-15 |
| A | CN 113580134 A (HUBEI ECARX TECHNOLOGY CO., LTD.) 02 November 2021 (2021-11-02) <br> entire document | 1-15 |
| A | US 2011243455 A1 (AISIN AW CO., LTD.) 06 October 2011 (2011-10-06) <br> entire document | 1-15 |
| A | WO 2022206255 A1 (GUANGDONG OPPO MOBILE TELECOMMUNICATIONS CORP., LTD.) 06 October 2022 (2022-10-06) <br> entire document | 1-15 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **18 December 2023** | **22 December 2023** |

| Name and mailing address of the ISA/CN | Authorized officer |
|---|---|
| China National Intellectual Property Administration (ISA/ CN) <br> China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**
Information on patent family members

International application No.

**PCT/CN2023/123970**

| Patent document cited in search report | | | Publication date (day/month/year) | Patent family member(s) | | | Publication date (day/month/year) |
|---|---|---|---|---|---|---|---|
| CN | 109186616 | A | 11 January 2019 | None | | | |
| CN | 106447585 | A | 22 February 2017 | None | | | |
| CN | 113580134 | A | 02 November 2021 | None | | | |
| US | 2011243455 | A1 | 06 October 2011 | JP | 2011215973 | A | 27 October 2011 |
| | | | | EP | 2372611 | A2 | 05 October 2011 |
| | | | | CN | 102208013 | A | 05 October 2011 |
| WO | 2022206255 | A1 | 06 October 2022 | CN | 113096185 | A | 09 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211289232